# EUROPEAN PATENT SPECIFICATION

(11) **EP 2 620 253 B1**
(45) Date of publication and mention of the grant of the patent: **03.09.2014**
(21) Application number: 12189808.4
(22) Date of filing: 24.10.2012
(51) Int. Cl.: B23Q 3/155, B23Q 16/04

(54) **Machine tool with a grip arm**
Werkzeugmaschine mit einem Greifarm
Machine-outil avec un bras de préhension

(30) Priority: 30.01.2012 JP 2012017099; 30.05.2012 JP 2012123522
(43) Date of publication of application: 31.07.2013
(73) Proprietor: Brother Kogyo Kabushiki Kaisha, Nagoya-shi, Aichi 467-8561 (JP)
(72) Inventor: Tsuji, Shunsuke, Nagoya-shi, Aichi 467-8562 (JP); Ito, Keishi, Nagoya-shi, Aichi 467-8562 (JP); Hayashi, Shozo, Nagoya-shi, Aichi 467-8562 (JP)
(74) Representative: Prüfer & Partner GbR European Patent Attorneys

(56) References cited:
- EP-A1- 0 642 880
- EP-A2- 1 317 992
- WO-A1-2005/042205
- US-A- 6 042 524

## Description

### BACKGROUND

### 1. Technical Field

The present invention relates to a machine tool in which a tool mounted in a spindle is exchanged with a tool conveyed by a conveying section.

### 2. Description of Related Art

A machine tool performs various kinds of machining and is equipped with a tool magazine for storing a plurality of tools. The tool magazine can position a predetermined tool selected from among the plurality of tools at a predetermined position. The machine tool positions the predetermined tool at the predetermined position using the tool magazine on the basis of commands from the control section thereof, exchanges the tool with the tool mounted in the spindle, and performs predetermined machining.

Japanese Patent Application Laid-Open Publication No. Hei 11-48076 discloses a tool storage apparatus (tool magazine) and a machine tool equipped with the tool storage apparatus. The tool storage apparatus has a chain and sprockets, and a plurality of tool pots for accommodating tools are connected to the chain. The sprockets are connected to a drive source, such as a motor, the drive source is driven, and a desired tool pot (tool) is conveyed to the tool exchange position in which tool exchange is performed.

In some cases, the machine tool is equipped with arc-shaped grip arms extending in the up-down direction instead of the tool pots. The lower end section of the grip arm is bifurcated. The grip arm removably grips a tool at the bifurcated portions.

The above-mentioned machine tool is equipped with a plurality of grip arms and support members for rockably supporting each grip arm. The center axis of the rocking of the grip arm is located in the vicinity of the upper end section of the grip arm. In the following descriptions, the center axis of the rocking of the grip arm is referred to as the axis of the arm. The direction in which the arc-shaped portion of the grip arm extends is referred to as the direction of the arm. The direction of the axis of the arm intersects the direction of the arm.

Along a predetermined endless passage, the plurality of grip arms are conveyed sequentially to the exchange position. The rocking of the grip arms is restricted during the conveyance.

The spindle reciprocates between its machining position in which work is machined and its retraction position in which the spindle retracts so that the spindle does not interfere with the grip arm. The exchange position in which tool exchange is performed is located in the middle of the movement passage between the machining position and the retraction position.

The spindle has a cam mechanism for rocking the grip arm as the spindle reciprocates. The grip arm has a cam follower making contact with the cam mechanism. When the spindle reciprocates among the machining position, the exchange position and the retraction position, the positional relationship between the cam mechanism and the cam follower is changed. As a result, the grip arm is rocked between its rocking restricting position in which the grip arm is set in a rocking restriction state and its arm retraction position in which the grip arm is set in an arm retraction state. The arm retraction state is a state in which the grip arm has retracted so as not to interfere with the spindle.

When the grip arm in which a predetermined tool is gripped is conveyed to and stops at the exchange position, the spindle in which no tool is mounted is moved from the retraction position to the exchange position. The grip arm, the state of which has been changed from the arm retraction state to the rocking restriction state, delivers the tool to the spindle.

The spindle in which the tool is mounted is moved from the exchange position to the machining position. As the spindle is moved in this way, the grip arm in which no tool is gripped is rocked from the rocking restricting position to the arm retraction position.

After work machining is completed at the spindle, the spindle in which the tool is mounted is moved from the machining position to the exchange position. As the spindle is moved in this way, the grip arm in the arm retraction state is rocked from the arm retraction position to the rocking restricting position. At this time, the spindle delivers the tool to the grip arm.

The spindle in which no tool is mounted is moved from the exchange position to the retraction position.

Then, the grip arm stopping at the exchange position is conveyed from the exchange position, and the grip arm in which the tool to be used next is gripped stops at the exchange position. The spindle in which no tool is mounted is moved from the retraction position to the exchange position, and the grip arm delivers the tool to the spindle.

The tool mounted in the spindle is exchanged as described above.

A steel ball, part of which is exposed outside, is incorporated in the upper end section of a grip arm (Japanese Patent Application Laid-Open Publication No. 2005-271179). A compression coil spring is incorporated in the grip arm along the direction of the arm. The compression coil spring biases the steel ball in a direction in which the steel ball protrudes from the grip arm. The support member thereof has a guide face formed along a direction opposite to the rocking direction of the grip arm. In the machine tool configured as described above, the steel ball of the grip arm slides along the guide face of the support member, thereby smoothly guiding the rocking of the grip arm.

In recent years, machine tools are aimed to be made compact.

However, since the grip arm incorporates the steel ball and the compression coil spring placed side by side along the direction of the arm, it is difficult to shorten the length of the grip arm in the direction of the arm. Furthermore, since the guide face on which the steel ball slides is required to be disposed in the direction of the arm, it is difficult to shorten the length of the machine tool in the direction of the arm.

EP 0 642 880 A1 discloses a generic machine tool comprising: a grip arm having an arm section, a support section for rockably supporting the arm section and a tool gripping section for removably gripping a tool; a spindle in which the tool gripped by the grip arm is removably mounted in a tool mounting section so that work is machined; and a conveying section for conveying the grip arm to an exchange position in which the tool mounted in the spindle is exchanged, wherein the spindle is movable between a machining position in which work is machined and the exchange position, the support section has a guide face formed along the rocking direction of the arm section; and between a rocking center shaft of the arm section and the tool gripping section, the arm section has a protruding section which protrudes in a direction perpendicular the axial direction of the center shaft and a tip end portion of which.slides along the guide face.

Another machine tool is known from EP 1 317 992 A2.

It is the object of the present invention to provide a machine tool, in which the grip arm conveyed to the exchange position is rockable and smoothly guided as the spindle is moved, wherein the size of the machine tool in the axis-intersection direction can be reduced and the movement of the grip arm beyond its allowable range in the axis-parallel direction can be restricted.

This object is achieved by the machine tool having the features of claim 1. The invention is further developed as defined in the dependent claims.

A machine tool according to a first aspect of the present invention is equipped with a grip arm having an arm section, a support section for rockably supporting the arm section, and a tool gripping section for removably gripping a tool; a spindle in which the tool gripped by the grip arm is removably mounted in a tool mounting section so that work is machined; and a conveying section for conveying the grip arm to an exchange position in which the tool mounted in the spindle is exchanged, wherein the spindle is moved between a machining position in which work is machined and the exchange position, the grip arm conveyed to the exchange position is rocked as the spindle is moved so that the tool gripping section moves close to and away from the tool mounting section, the support section has a guide face formed along the rocking direction of the arm section, and between the rocking center shaft of the arm section and the tool gripping section, the arm section has a protruding section which protrudes in a direction along the axial direction of the center shaft and the tip end portions of which slides along the guide face.

The machine tool has the grip arms, the support sections, the spindle, the conveying section, the guide faces, and the protruding sections.

The spindle is moved between the machining position in which work is machined and the exchange position in which the tool mounted in the spindle is exchanged. A tool suited for the machining to be performed on work is removably mounted in the tool mounting section of the spindle, and the tool mounted therein performs the machining on the work.

The grip arm removably grips the tool to be mounted in the spindle using the tool gripping sections. The support sections rockably support the grip arm.

The conveying section conveys each of the grip arms to the exchange position.

The grip arm having been conveyed to the exchange position by the conveying section is rocked as the spindle is moved. At this time, the tool gripping sections of the grip arm get close to and away from the tool mounting section of the spindle.

Since the guide faces are provided on the support sections, the guide faces are not rocked together with the grip arm. The guide faces are formed along the rocking direction of the grip arm.

Since the protruding sections are provided in the grip arm, they are rocked together with the grip arm. At this time, the tip end portions of the protruding sections slide along the guide faces, whereby the guide faces are used to guide the rocking of the grip arm.

The protruding position of the protruding sections is located in the arm section between the arm shaft and the tool gripping sections. The arm shaft and the tool gripping sections are generally distanced therebetween by an appropriate length so that the movable range of the tool gripping sections is made wide. Hence, even if the protruding sections protrude between the arm shaft and the tool gripping sections, the size of the arm section between the arm shaft and the tool gripping sections does not become large.

The grip arm does not have any protruding sections on the opposite side of the tool gripping sections via the arm shaft (hereafter simply referred to as the opposite side of the tool gripping sections). Hence, the size of the grip arm between the arm shaft and the opposite side of the tool gripping sections (furthermore, the size of the grip arm in the axis-intersecting direction thereof) is smaller than that in the case that the protruding sections are provided on the opposite side of the tool gripping sections.

Since the protruding direction of the protruding sections is a direction along the axial direction (hereafter referred to as an axis-parallel direction), the protruding sections and the guide faces are arranged along the axial direction. For this reason, the size of the machine tool in the axis-intersecting direction is smaller than that in the case that the protruding sections and the guide faces are arranged in the axis intersecting direction. Although the protruding sections are provided between the arm shaft and the tool gripping sections of the grip arm, the protruding sections and the guide faces do not inhibit the mounting and dismounting of the tool.

In a machine tool according to a second aspect of the present invention, the guide face has a first concave section into which the tip end portion is inserted when the tool gripping section moves close to the tool mounting section, and a second concave section into which the tip end portion is inserted when the tool gripping section moves away from the tool mounting section, the depth of which is smaller than that of the first concave section, and the protruding section has a biasing section for biasing the tip end portion toward the guide face.

The guide face has the first concave section and the second concave section.

The tip end portion of the protruding section slides along the guide face as the grip arm is rocked.

The tip end portion of the protruding section is biased toward the guide face. Hence, as the grip arm is rocked, the tip end portion is inserted into the first concave section or the second concave section, whereby the protruding section is engaged with the first concave section or the second concave section.

The tip end portion of the protruding section can be inserted into and removed from the first concave section and the second concave section. Hence, when the grip arm is rocked as the spindle is moved, the tip end portion of the protruding section gets away from the first concave section or the second concave section. As the grip arm is rocked, the engagement between the protruding section and the first concave section or the second concave section can be released. The depth of the first concave section is larger than the depth of the second concave section. Hence, the engagement between the protruding section and the first concave section is relatively strong (that is, it is difficult to release the engagement), and the engagement between the protruding section and the second concave section is relatively gentle (that is, it is easy to release the engagement).

The time when the tool gripping sections of the grip arm get away from the spindle is the time when work is machined at the spindle, for example. At this time, the rocking of the grip arm can be restricted by the gentle engagement between the protruding section and the second concave section.

When the tool gripping sections of the grip arm are away from the spindle, there is no particular problem even if the grip arm is rocked to some extent. Since the engagement between the protruding section and the second concave section is released easily, the grip arm can be rocked smoothly.

The time when the tool gripping sections of the grip arm get close to the spindle is the time when tool exchange is performed between the grip arm and the spindle, for example. At this time, the rocking of the grip arm beyond its allowable range in the rocking direction is restricted severely by the strong engagement between the protruding section and the first concave section.

If the stop position of the grip arm has a deviation when the tool gripping sections of the grip arm are moving close to the spindle, there occur problems, such as the breakage of the grip arm and the drop of the tool.

In a machine tool according to a third aspect of the present invention, the second concave section is recessed stepwise.

Since the second concave section is recessed stepwise, the tip end portion of the protruding section smoothly enters the second concave section and smoothly gets out of the second concave section.

In a machine tool according to a fourth aspect of the present invention, the guide face has a concave section into which the tip end portion is inserted when the tool gripping section moves close to the tool mounting section, and a non-concave contact section with which the tip end portion makes contact when the tool gripping section moves away from the tool mounting section, and the protruding section has a biasing section for biasing the tip end portion toward the guide face.

The time when the tool gripping sections of the grip arm get close to the spindle (for example, in the case that tool exchange is performed between the grip arm and the spindle) will be described.

As the grip arm is rocked, the tip end portion of the protruding section slides along the guide face. The tip end portion of the protruding section is biased toward the guide face. As the grip arm is rocked, the tip end portion of the protruding section is inserted into the recessed section. Since the tip end portion of the protruding section is inserted into the recessed section, the grip arm can be positioned securely at a predetermined position.

If the position of the grip arm has a deviation when the tool gripping sections of the grip arm are moving close to the spindle, there is a danger that tool exchange or spindle movement, for example, may be inhibited in the machine tool.

As the spindle is moved, the grip arm is rocked, and the tip end portion of the protruding section gets out of the recessed section. As the grip arm is rocked, the engagement between the protruding section and the recessed section is released automatically.

The time when the tool gripping sections of the grip arm get away from the spindle (for example, the time when work is machined at the spindle) will be described.

At this time, the engagement between the protruding section and the recessed section does not occur. When the tool gripping sections of the grip arm get away from the spindle, no problem occurs even if the grip arm is not positioned accurately because the tool has already been mounted in the spindle. Hence, the protruding section should only be located at the non-concave contact section. In the case described above, since the engagement between the protruding section and the recessed section is not necessary, the grip arm can be rocked smoothly.

When the tip end portion of the protruding section is inserted into the recessed section, a force for accelerating the grip arm is exerted to the grip arm, and the grip arm is not rocked smoothly. When the protruding section makes contact with the contact section, the problem described above does not occur.

In a machine tool according to a fifth aspect of the present invention, the contact section has a tapered face that is inclined so as to move close to the arm section as moving away from the concave section.

The contact section has a face (hereafter referred to as an inclined face) that is inclined in a tapered shape in the direction of moving close to the grip arm as moving away from the concave section. If the grip arm cannot stop but is likely to be rocked further, a force is gradually exerted from the inclined face to the tip end portion of the protruding section, and the protruding section and the grip arm are decelerated gradually and then stop. Hence, the inclined face can reasonably suppress excessive rocking of the grip arm.

When the protruding section having stopped at the contact section slides to the recessed section, the force exerted from the inclined face to the tip end portion of the protruding section disappears gradually, and the protruding section and the grip arm are accelerated gradually. Hence, the inclined face can contribute to the smooth rocking of the grip arm.

If the contact section is entirely flat, there is a danger that the grip arm cannot stop but is rocked excessively due to inertia or an external force exerted thereto, for example. If the contact section has a convex section orthogonal to the flat section, when the grip arm cannot stop and collides with the side face of the convex section, excessive rocking of the grip arm can be suppressed, but unnecessary vibration or breakage, for example, occurs.

In a machine tool according to a sixth aspect of the present invention, the tip end portion is a spherical member, each of the protruding sections has an accommodating concave section recessed in a direction parallel with the axial direction, a biasing spring accommodated in the accommodating concave section and serving as the biasing section, and a spherical member holding cylinder engaging with the end section of the biasing spring and having a closed cylinder section on the side of an opening of the accommodating concave section, and the spherical member is rotatably accommodated in the closed cylinder section. Since the biasing spring is accommodated in the accommodating concave section and the spherical member holding cylinder for holding the spherical member is engaged with the biasing spring, foreign matter, such as chips, does not enter the biasing spring. Since the tip end portion is formed of the spherical member, the guide face is hardly damaged.

In a machine tool according to a seventh of aspect of the present invention, a guide cylinder for allowing the smooth movement of the spherical member holding cylinder in a direction parallel with the axial direction is fitted in the inside of the opening portion of the accommodating concave section, and the spherical member holding cylinder is disposed in the inside of the guide cylinder.

Since the spherical member holding cylinder can move smoothly in the axial direction by virtue of the guide cylinder, the rocking of the grip arm becomes further smoother.

In a machine tool according to a eighth aspect of the present invention, the protruding sections, two in number, protrude in directions opposite to each other, and the guide face is disposed so as to be opposed to the tip end portion of each of the protruding sections.

If a problem occurs while the guiding is performed using one of the protruding sections and the guide face, the rocking of the grip arm can be guided using the other protruding section and the guide face in the machine tool.

Even if the grip arm is likely to move in the axis-parallel direction, the tip end portion of the protruding section moving together with the grip arm makes contact with the guide face. Hence, the movement of the grip arm beyond its allowable range in the axis-parallel direction can be restricted.

### BRIEF DESCRIPTION OF THE DRAWINGS

FIG. 1 is a perspective view showing a machine tool according to Embodiment 1;
FIG. 2 is a front view showing the machine tool;
FIG. 3 is a right side view showing the machine tool;
FIG. 4 is a perspective view showing the machine tool, with the cover for covering a tool exchanging device and a rail, etc. omitted;
FIG. 5 is a fragmentary sectional view simply showing a spindle head;
FIG. 6 is a perspective view simply showing a rail section;
FIG. 7 is a perspective view simply showing a tool magazine ;
FIG. 8 is a perspective view simply showing a moving carriage;
FIG. 9 is a perspective view simply showing the moving carriage mounted on the rail;
FIG. 10 is a perspective view simply showing a cam mechanism, a grip arm, and a positioning mechanism;
FIG. 11 is an enlarged perspective view simply showing the cam mechanism;
FIG. 12 is a perspective view simply showing the grip arm;
FIG. 13 is an enlarged perspective view simply showing the positioning mechanism;
FIG. 14 is a right side view simply showing the grip arm located at an exchange position and gripping a tool holder;
FIG. 15 is a rear view simply showing the grip arm located at the exchange position and gripping the tool holder;
FIG. 16 is a sectional view showing a guide plate taken on line XVI-XVI of FIG. 14;
FIG. 17 is a sectional view showing an arm section taken on line XVII-XVII of FIG. 14;
FIG. 18 is a right side view simply showing the grip arm located at the exchange position and not gripping the tool holder;
FIG. 19 is a right side view simply showing the cam mechanism, the grip arm, and the positioning mechanism at the time when the spindle head is rising;
FIG. 20 is a right side view simply showing the cam mechanism, the grip arm, and the positioning mechanism at the time when the spindle head is rising;
FIG. 21 is an enlarged front view simply showing positioning operation using the positioning mechanism;
FIG. 22 is a right side view simply showing the cam mechanism, the grip arm, and the positioning mechanism at the time when the spindle head is rising;
FIG. 23 is a right side view simply showing the cam mechanism, the grip arm, and the positioning mechanism at the time when the spindle head is rising;
FIG. 24 is a right side view simply showing the cam mechanism, the grip arm, and the positioning mechanism at the time when the spindle head is lowering;
FIG. 25 is a right side view simply showing the cam mechanism, the grip arm, and the positioning mechanism at the time when the spindle head is lowering;
FIG. 26 is a right side view simply showing the cam mechanism, the grip arm, and the positioning mechanism at the time when the spindle head is lowering;
FIG. 27 is a right side view simply showing the cam mechanism, the grip arm, and the positioning mechanism at the time when the spindle head is lowering;

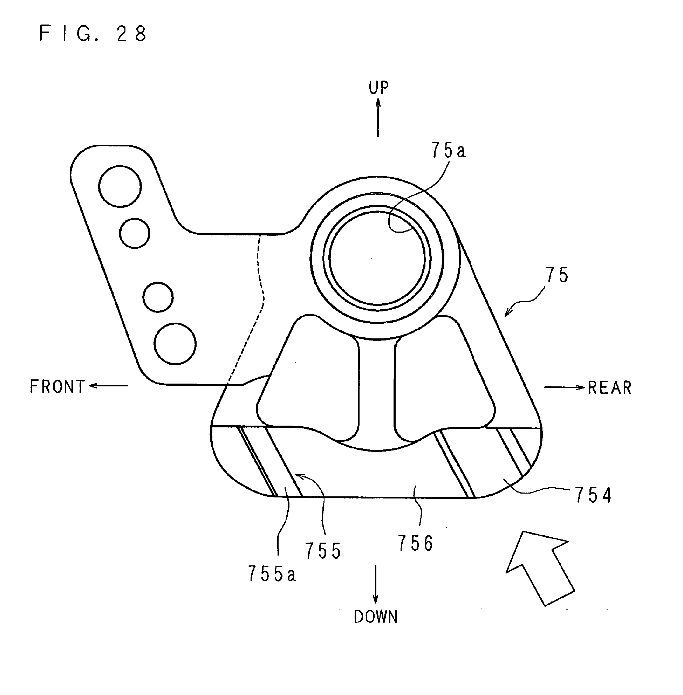

FIG. 28 is a side view showing a guide plate provided for a machine tool according to Embodiment 2;

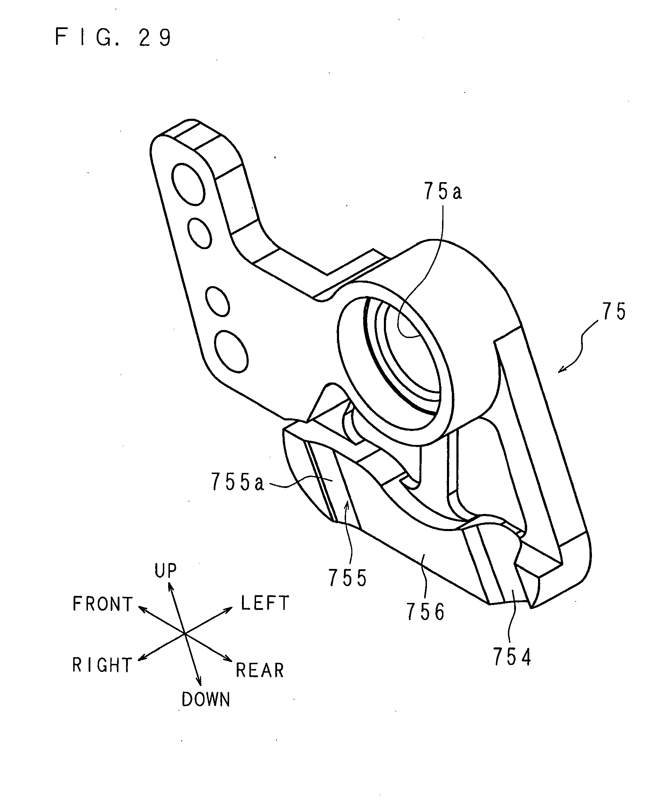

FIG. 29 is a perspective view showing the guide plate;
FIG. 30 is a view taken in the direction indicated by the hollow arrow shown in FIG. 28; and
FIG. 31 is a fragmentary sectional view showing the protruding section of an arm section according to Embodiment 3.

### DETAILED DESCRIPTION

### Embodiment

Machine tools according to Embodiments of the present invention will be described on the side of the accompanying drawings. In the following descriptions, the up-down direction, the left-right direction, and the front-rear direction indicated by the arrows shown in the drawings are used.

### Embodiment 1

The worker operates a machine tool in front thereof and mounts/dismounts work.

A machine tool 100 has a base 20, a Y-direction moving device 22, an X-direction moving device 26, a column 28, a Z-direction moving device 30, a spindle head 32, a tool exchanging device 10 (conveying section), etc. The base 20 is secured onto the face of the floor. The base 20 supports the column 28 so that the column 28 is movable in the X-direction (the left-right direction) and in the Y-direction (the front-rear direction) via the Y-direction moving device 22 and the X-direction moving device 26. The base 20 supports a work holding device 120 that is used to hold work serving as an object to be machined while driving the work around two axes. The column 28 movably supports the spindle head 32 in the Z-direction (the up-down direction) via the Z-direction moving device 30. The tool exchanging device 10 exchanges tools to be mounted in the spindle head 32.

The Y-direction moving device 22 has a pair of guide rails 22a and 22a being parallel with each other, a plurality of blocks 22b, 22b, ..., a Y-direction moving carriage 22c, and a Y-direction drive motor (not shown). The guide rails 22a and 22a extend in the front-rear direction on the upper face of the base 20 with an appropriate clearance therebetween in the left-right direction. The blocks 22b, 22b, ... are fitted on the guide rails 22a and 22a so as to be movable in the front-rear direction. The Y-direction moving carriage 22c is secured onto the blocks 22b, 22b, ... The Y-direction moving carriage 22c is moved in the front-rear direction by the drive of the Y-direction drive motor.

The X-direction moving device 26 has a pair of guide rails 26a and 26a being parallel with each other, a plurality of blocks 26b, 26b, ..., a column base 26c, and an X-direction drive motor (not shown). The guide rails 26a and 26a extend in the left-right direction on the upper face of the Y-direction moving carriage 22c with an appropriate clearance therebetween in the front-rear direction. The blocks 26b, 26b, ... are movably fitted on the guide rails 26a and 26a in the left-right direction. The column base 26c is secured onto the blocks 26b, 26b, ... The column 28 is moved in the left-right direction by the drive of the X-direction drive motor.

The column 28 is secured onto the column base 26c. The column 28 is moved in the Y-direction and the X-direction by the Y-direction moving device 22 and the X-direction moving device 26.

The Z-direction moving device 30 has a pair of guide rails 30a and 30a being parallel with each other, a plurality of blocks 30b, 30b, ..., a spindle head base 30c, a Z-direction moving motor (not shown). The guide rails 30a and 30a extend in the up-down direction on the front face of the column 28 with an appropriate clearance therebetween in the left-right direction. The plurality of blocks 30b, 30b, ... are movably fitted on the guide rails 30a and 30a in the up-down direction. The spindle head base 30c is secured onto the front faces of the blocks 30b, 30b, ... The spindle head base 30c is moved in the up-down direction by the drive of the Z-direction drive motor.

The spindle head 32 is secured to the spindle head base 30c. The spindle head 32 is moved in the front-rear direction, the left-right direction, and the up-down direction by driving and controlling the X-direction drive motor, the Y-direction drive motor, and the Z-direction moving motor.

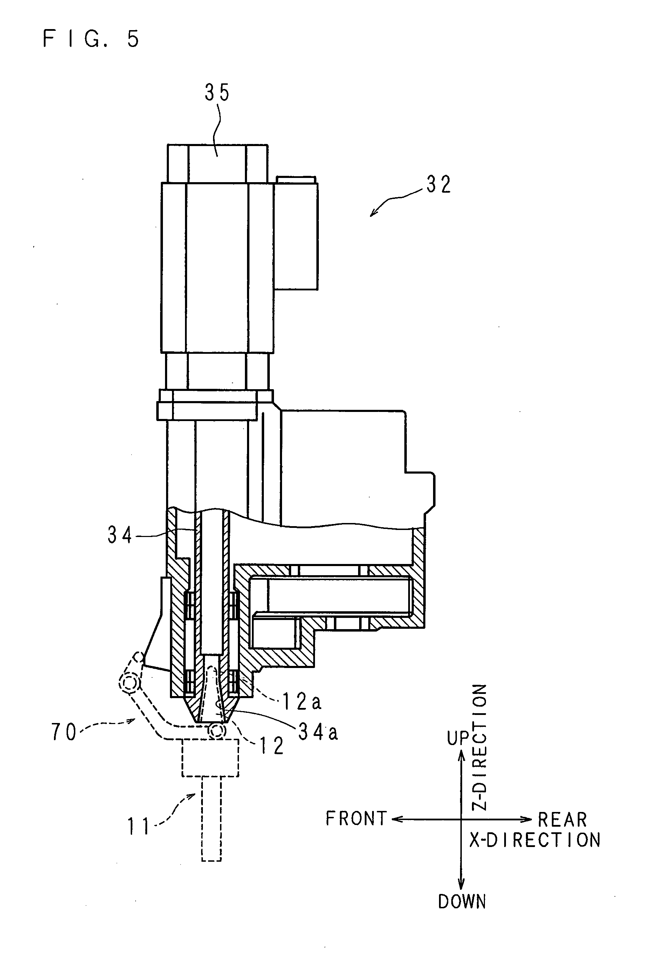

As shown in FIG. 5, the spindle head 32 rotatably holds a spindle 34 extending in the Z-direction in the inside thereof on the front side. The spindle 34 removably holds a tool holder 11 at the lower end section thereof. The tool holder 11 has a cylindrical shape, and a tool is mounted therein. The spindle 34 has a hollow cylindrical shape and has a tapered bore 34a (a tool mounting section), the inside diameter of which increases in the downward direction to the lower end section. A tapered mounting section 12 formed on the upper section of the tool holder 11 is fitted in the tapered bore 34a, whereby the tool holder 11 is mounted in the spindle 34.

Above the tapered bore 34a of the spindle 34, a draw bar (not shown) is inserted so as to be movable in the axial direction of the spindle 34. A clamp spring (not shown) is disposed around the draw bar. The clamp spring biases the draw bar upward. The lower end section of the draw bar has a grip section (not shown). When the tool holder 11 is mounted in the spindle 34, the grip section grips a pull stud 12a protruding upward from the tapered mounting section 12. Since the draw bar is biased upward, the grip section keeps gripping the pull stud 12a.

The spindle head 32 has a pressing mechanism (not shown) above the draw bar. The pressing mechanism presses the draw bar downward against the elastic force of the clamp spring. When the draw bar is pressed downward, the grip section releases the gripping of the pull stud 12a. When the grip section releases the gripping of the pull stud 12a, the tool holder 11 is dismounted from the spindle 34.

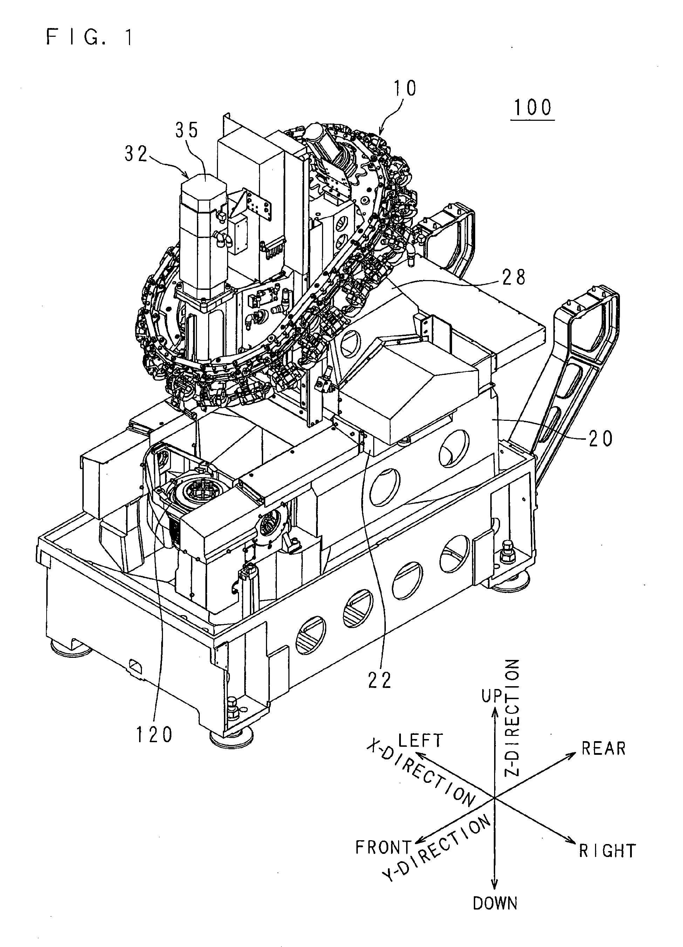

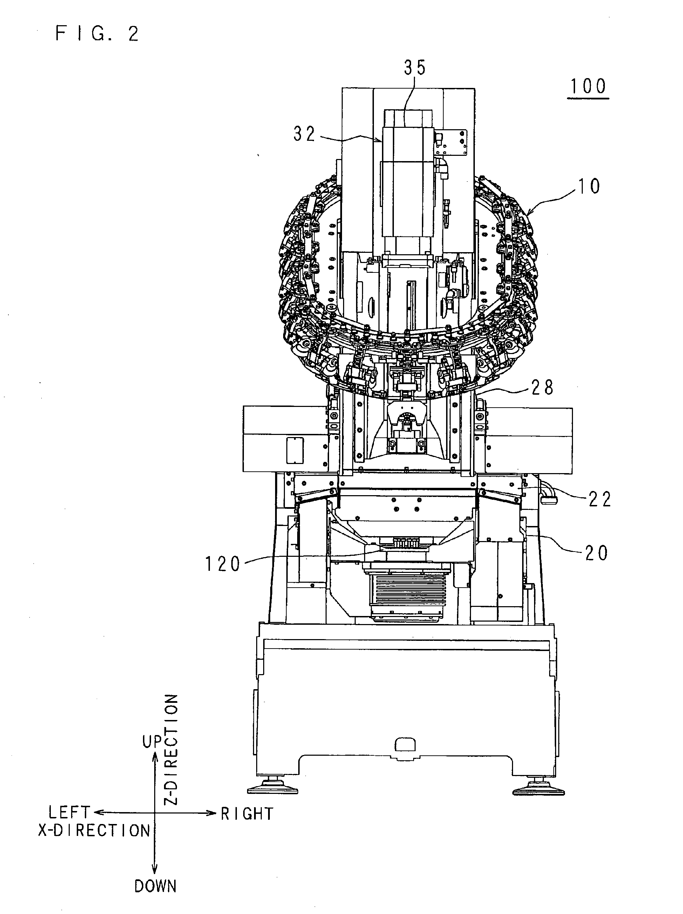

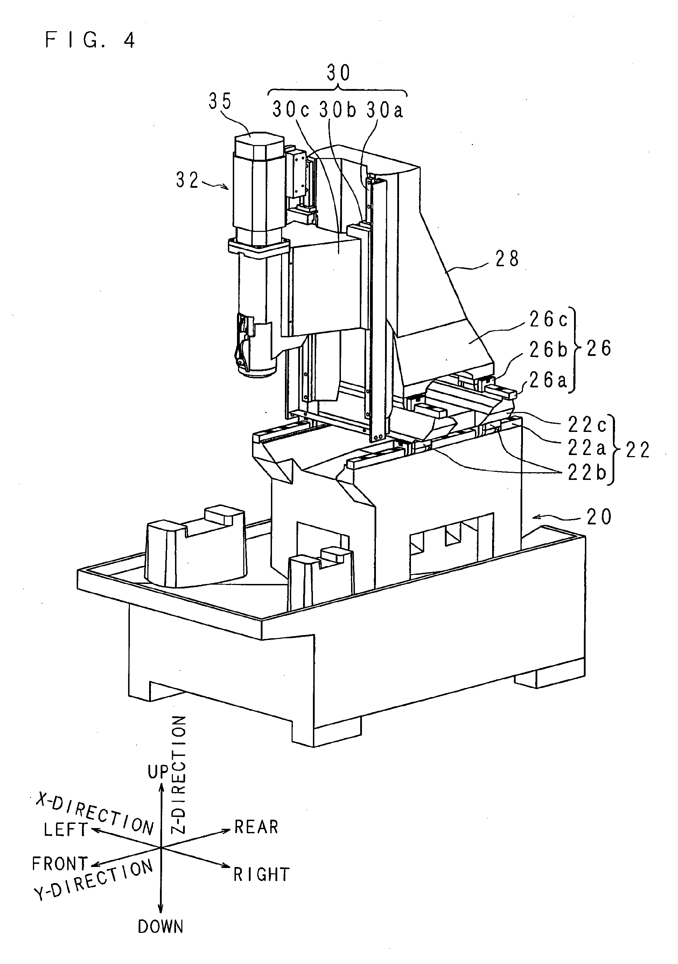

The spindle 34 is connected to a spindle motor 35 (see FIGS. 1 to 4 and FIG. 10) provided at the upper end of the spindle head 32. The spindle 34 is rotated around its axis by the drive of the spindle motor 35. The spindle 34 is rotated around its axis with the tool holder 11 mounted at the lower end thereof, and the work secured to the work holding device 120 is machined by the rotation.

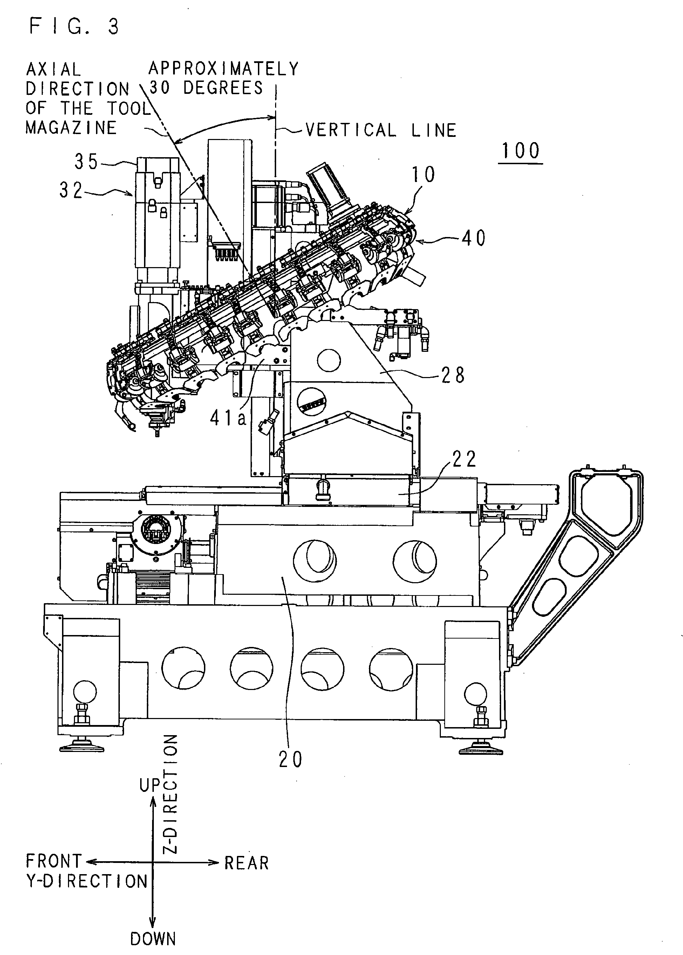

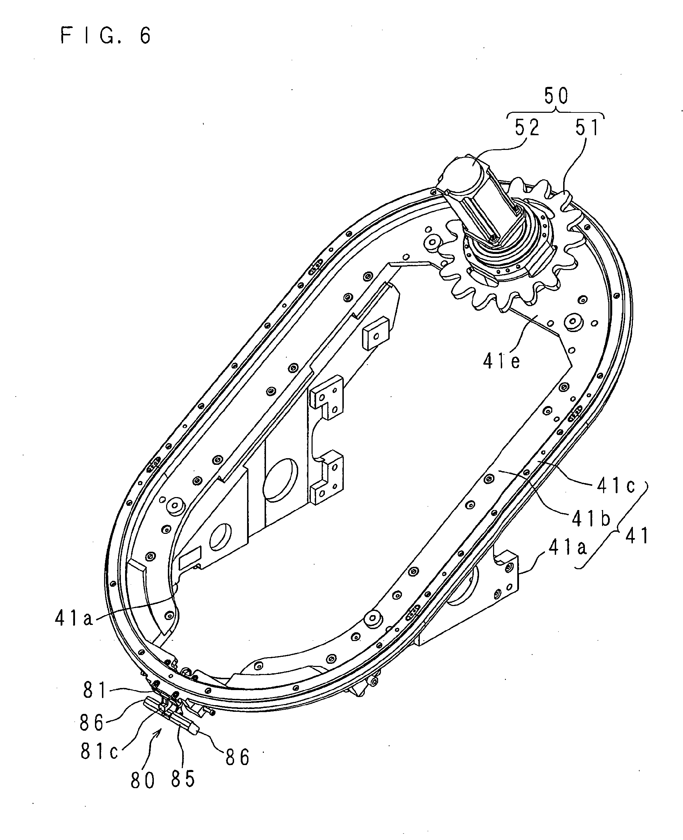

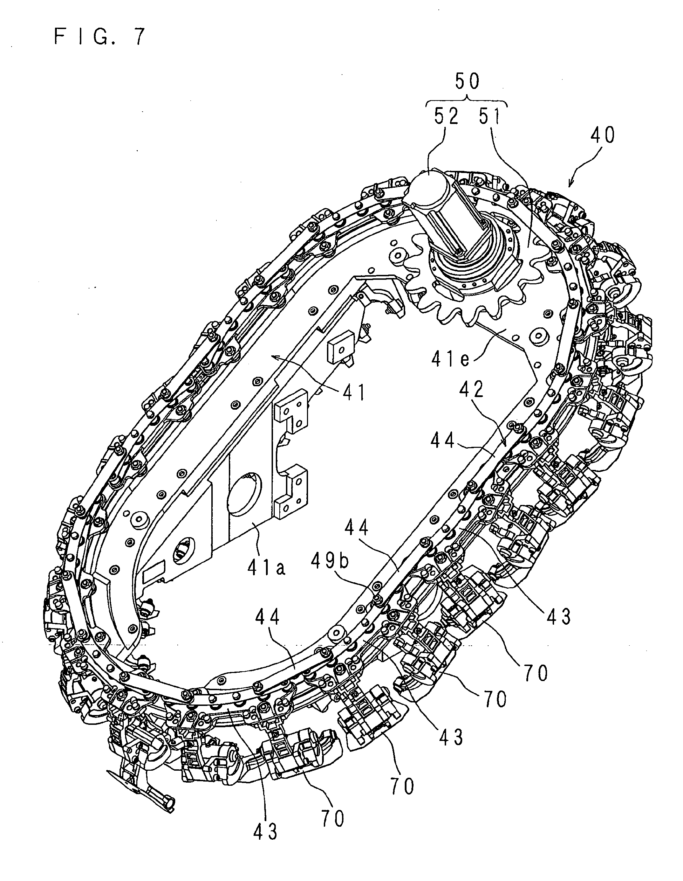

The tool exchanging device 10 has a tool magazine 40 (see FIGS. 3 and 7) and a magazine drive section 50 (see FIGS. 6 and 7). The tool exchanging device 10 conveys a plurality of tool holders 11, and each of the tool holders 11 is mounted and dismounted at the lower end section of the spindle 34.

The tool magazine 40 has a rail section 41 and a chain section 42. The rail section 41 has support beams 41a and 41a (see FIG. 3), a rail base 41b, and a rail 41c. Each of the support beams 41a and 41a is a triangular plate member, the upper side of which is an oblique side inclined downward in the forward direction. The support beams 41a and 41a are secured to the left and right sides of the column 28 in a cantilever manner. The support beams 41a and 41a extend from the portions secured to the left and right sides of the column 28 to both side portions of the spindle head 32 so as to be inclined downward in the forward direction.

The rail base 41b is an elliptic annular member and is secured to the support beams 41a and 41a so as to enclose the column 28 and the spindle head 32. The rail base 41b extends from the front lower side to the rear upper side thereof along the upper end faces of the support beams 41a and 41a while being inclined approximately 30 degrees from the horizontal plane. The semicircular portion on the rear side of the rail base 41b is provided so that a plate-shaped mounting base 41e extends from the periphery of the semicircular portion. The mounting base 41e supports the magazine drive section 50.

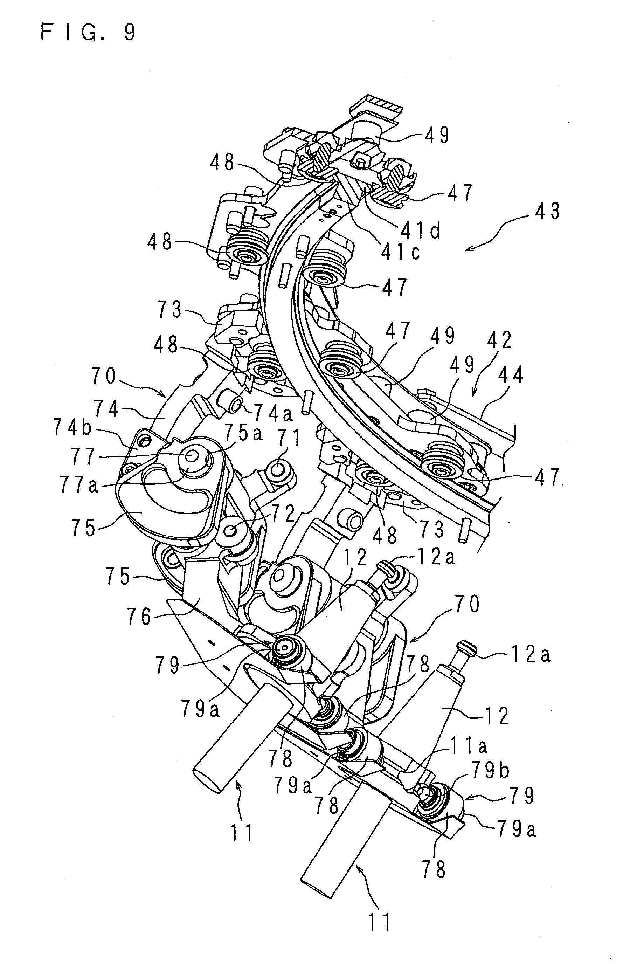

The rail 41c has a nearly rectangular shape in vertical cross section, and an elliptic endless rail is formed on the rail base 41b (see FIG. 6). As shown in FIG. 9, the rail 41c has elliptic flange-shaped fitting sections 41d and 41d formed respectively on the inner circumferential side face and the outer circumferential side face of the elliptic rail thereof. The fitting sections 41d and 41d are fitted in the V-grooves of inner rollers 47 and outer rollers 48.

As shown in FIGS. 7 and 9, the chain section 42 has a plurality of moving carriages 43, 43, ..., a plurality of link members 44, 44, ..., a plurality of grip arms 70, 70, .... The rail 41c supports the plurality (for example, 11) of moving carriages 43, 43, ..., and the moving carriages 43, 43, ... are movable on the rail 41c. Each of the link members 44, 44, ... connects the moving carriages 43 and 43 being adjacent to each other. The plurality of moving carriages 43, 43, ... and the plurality of link members 44, 44, ... form an endless chain. As shown in FIGS. 7 to 9, the plurality (for example, 22) of grip arms 70, 70, .... are connected to the lower sections of the moving carriages 43, 43, ... and grip the tool holders 11.

The moving carriages 43, 43, ... of the tool magazine 40 circulate along the rail 41c, and the tool holder 11 gripped by each grip arm 70 is positioned at the exchange position below the spindle 34. Since the rail base 41b is disposed so as to be inclined approximately 30 degrees from the horizontal plane, the axial direction of the tool magazine 40 is inclined approximately 30 degrees toward the spindle head 32 from the vertical line (see FIG. 3).

The moving carriage 43 has a base plate 46, the inner rollers 47 and 47, the outer rollers 48 and 48, and a plurality of pins 49, 49, ... The base plate 46 has a nearly rectangular shape and supports the inner rollers 47 and 47 and the outer rollers 48 and 48 on its lower face so that the rollers 47,48 are rotatable around their axes in the normal direction of the lower face.

Each of the inner rollers 47 and 47 and the outer rollers 48 and 48 has a disc shape and has a V-groove around the outer circumference thereof. The V-grooves of the inner rollers 47 and 47 are fitted on the fitting section 41d provided on the inner circumferential side face of the rail 41c, and the V-grooves of the outer rollers 48 and 48 are fitted on the fitting section 41d provided on the outer circumferential side face of the rail 41c.

The six pins 49, 49, ... are provided so as to stand on the upper face of the base plate 46. When the moving carriage 43 is located at the semicircular portion of the rail 41c, the plurality (for example, 6) of pins 49, 49, ... on the moving carriage 43 are arranged on a circumference concentric with the semicircle. The plurality of pins 49, 49, ... are engaged with a gear 51.

Each of the link members 44, 44, ... is used to connect the moving carriages 43 and 43 adjacent to each other. In each moving carriage 43, connecting shaft members 49b and 49b are provided on the second pins 49 and 49 of the six pins 49, 49, ... from both ends of the moving carriage 43. The link members 44, 44, ... are connected to the moving carriages 43 via the connecting shaft members 49b and 49b. Two of the grip arms 70, 70, .... are mounted at the lower section of each of the moving carriages 43, 43, ... The portion of the grip arm 70 for gripping the tool holder 11 is rocked so as to get close to and away from the lower end section of the spindle 34 to perform tool exchange. The grip arms 70, 70, .... will be described later in detail.

The grip pin units 79 and 79 of each grip arm 70 are disposed so as to be directed to the inner side of the rail 41c. The direction in which the two grip arms 70 and 70 mounted on the moving carriage 43 are arranged is the direction along the rail 41c. Since the moving carriages 43, 43, ... are arranged along the rail 41c, all the grip arms 70, 70, ... are arranged in the direction along the rail 41c. Since the grip arms 70, 70, ... are disposed at appropriate intervals, a sufficient spatial margin is present between the grip arms 70 and 70 adjacent to each other.

As shown in FIGS. 6 and 7, the magazine drive section 50 has the gear 51 and a magazine drive motor 52 and is installed on the mounting base 41e located behind the column 28. The gear 51 is an external gear having a trochoidal tooth surface, for example, and is rotatably installed on the upper face of the mounting base 41e. The face of the gear is nearly parallel with the upper face of the mounting base 41e. The gear 51 is engaged with the pins 49, 49, ... on the moving carriage 43. The diameter of the gear 51 is smaller (for example, approximately 1/2) than the diameter of the semicircular portion of the rail 41c. Since the diameter of the gear 51 is small, the tool magazine 40 can be made compact without mechanically interfering with the column 28.

The rotation shaft (not shown) of the magazine drive motor 52 is directly connected to the shaft of the gear 51 to rotate and drive the gear 51. When the gear 51 is rotated, the gear 51 pushes the pins 49, 49, ... mounted on the moving carriage 43 in the tangential direction of the circumference of the rail 41c. The moving carriage 43 is moved on the rail 41c by the rotation of the gear 51. The magazine drive motor 52 rotates the gear 51 to convey the moving carriage 43. When tool exchange is performed, the tool magazine 40 conveys a predetermined grip arm 70 to the exchange position (at the front lower end section of the rail base 41b) below the spindle 34.

The grip arm 70 is rocked by a cam mechanism 60 and exchanges the tool holder 11 to be mounted in the spindle 34. A tool has been mounted beforehand in the tool holder 11.

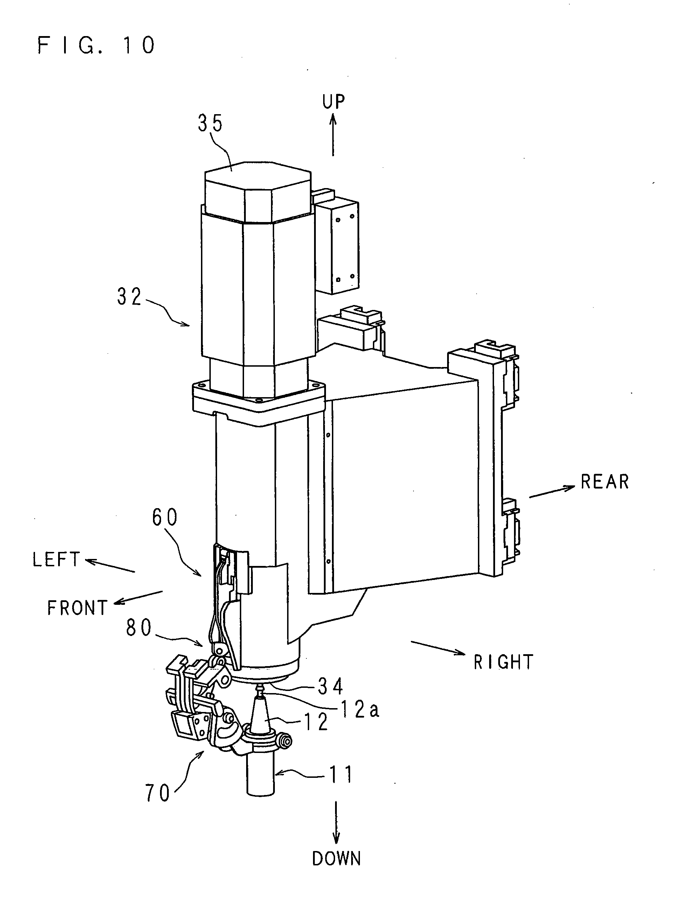

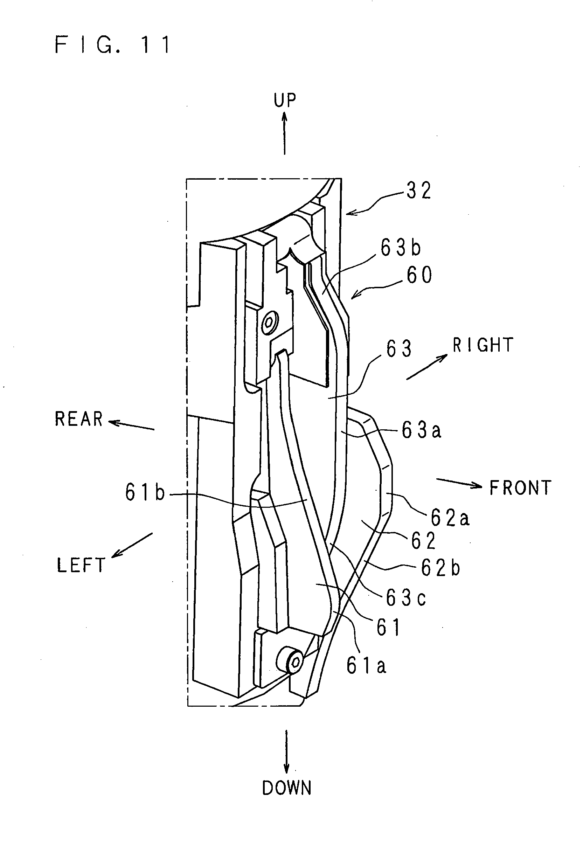

As shown in FIGS. 10 and 11, the cam mechanism 60 is installed on the front face of the spindle head 32. The cam mechanism 60 has an approaching cam 61, a separating cam 62, and a positioning cam 63. The approaching cam 61, the separating cam 62, and the positioning cam 63 each have a plate shape extending long in the up-down direction and protruding from the front face of the spindle head 32. The approaching cam 61, the positioning cam 63, and the separating cam 62 are arranged from left to right in this order. The protruding width (the width in the front-rear direction) of the approaching cam 61 decreases in the upward direction from the apex 61a thereof located slightly above the lower end. On the lower side of the approaching cam 61 from the apex 61a, the protruding width (the width in the front-rear direction) decreases in the downward direction. The approaching cam 61 has a cam face 61b increasing in height from the upper end in the downward direction in a tapered shape and connected to the apex 61a.

The separating cam 62 has a flat apex section 62a at a portion slightly above the central section in the up-down direction, and the protruding width (the width in the front-rear direction) thereof decreases in the downward direction. On the upper side of the separating cam 62 from the apex section 62a, the protruding width decreases in the upward direction. The separating cam 62 has a cam face 62b increasing in height from the lower end in the upward direction in a tapered shape and connected to the apex section 62a.

The upper end section of the approaching cam 61 is located above the upper end section of the separating cam 62, and the lower end section of the separating cam 62 is located below the lower end section of the approaching cam 61. The apex section 62a of the separating cam 62 is away from the apex 61a of the approaching cam 61 in the up-down direction, and the positions of the two in the front-rear direction are nearly the same. The inclination angle of the cam face 61b and the inclination angle of the cam face 62b from the up-down direction are approximately the same, but the directions thereof are opposite to each other.

The positioning cam 63 has a flat section 63a having a constant protruding width at the central section thereof in the up-down direction. On the upper side from the flat section 63a of the positioning cam 63, the protruding width decreases in the upward direction. On the lower side from the flat section 63a of the positioning cam 63, the protruding width decreases in the downward direction. The upper end section of the positioning cam 63 has an upper cam face 63b increasing in height from the upper end in a tapered shape and connected to the flat section 63a, and the lower end section thereof has a lower cam face 63c increasing in height from the lower end in a tapered shape and connected to the flat section 63a. The inclination angles of the upper cam face 63b and the lower cam face 63c from the up-down direction are approximately the same as the inclination angles of the cam face 61b and the cam face 62b.

The upper end of the positioning cam 63 is located above the upper end of the approaching cam 61. The lower end of the positioning cam 63 is located at a position approximately the same as the lower end of the approaching cam 61. The flat section 63a is located more rearward than the apex section 62a, and the height of the flat section 63a is lower than that of the apex section 62a.

The approaching cam 61 and the separating cam 62 make contact with a first cam follower 71 and a second cam follower 72, respectively, and the positioning cam 63 makes contact with a positioning cam follower 83.

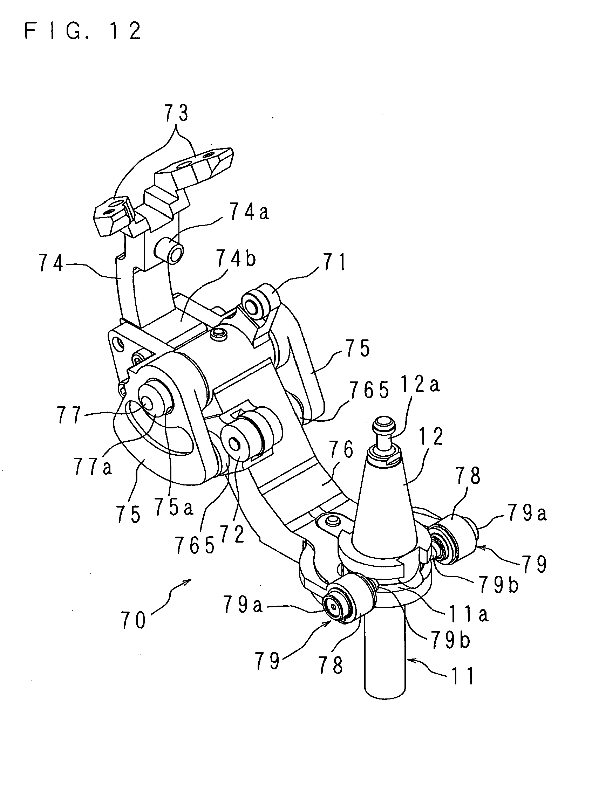

As shown in FIG. 12, the grip arm 70 has mounting plates 73 that are installed on the above-mentioned moving carriage 43. A support rod 74 is connected to the mounting plates 73, and the support rod 74 protrudes downward from the mounting plates 73. The support rod 74 has a positioning pin 74a that makes contact with a pin receiving section 81c. The positioning pin 74a protrudes rearward from the support rod 74.

The support rod 74 has a block 74b at the lower end section thereof. Guide plates 75 and 75 (support sections) each having a first concave section 751, a second concave section 752, and a flat face 753 (guide face) are secured to the left and right side faces of the block 74b, respectively. The guide plates 75 and 75 support an arm shaft 77. The guide plates 75 and 75 are opposed to each other. Each guide plate 75 has a fan shape expanding downward from the upper end section thereof serving as a pivot. The upper end section of the guide plate 75 has an arm shaft hole 75a into which the arm shaft 77 is inserted. The positioning pin 74a passes through the support rod 74 in a direction orthogonal to the axial direction of the arm shaft hole 75a and in a direction orthogonal to the up-down direction and protrudes from the support rod 74.

The upper section of an arm section 76 is located between the two guide plates 75 and 75. The arm section 76 extends in the up-down direction and has a bent shape. The arm shaft 77 (center shaft) is secured to the upper end section of the arm section 76, and both end sections of the arm shaft 77 protrude from both sides of the upper end section of the arm section 76. Tapers 77a and 77a are formed at both end sections of the arm shaft 77. The arm shaft 77 is rotatably inserted into the arm shaft holes 75a and 75a of the guide plates 75 and 75. The guide plates 75 and 75 rockably support the arm section 76 via the arm shaft 77. In this embodiment, the rocking of the arm section 76 is referred to as the rocking of the grip arm 70.

The lower end section of the arm section 76 is bifurcated. The arm section 76 has holding cylinders 78 and 78 at the tip end sections of the bifurcated lower end section. The axial direction of the holding cylinders 78 and 78 is the same as that of the arm shaft 77. The holding cylinders 78 and 78 hold the grip pin units (tool gripping sections) 79 and 79. The grip arm 70 is installed on the moving carriage 43 so that the arm shaft 77 is placed along the rail 41c. The axial direction of the arm shaft 77 of the grip arm 70 located at the exchange position is the left-right direction.

As shown in FIG. 12, each grip pin unit 79 has a holder 79a having a closed cylinder shape and a pin 79b accommodated in the holder 79a. The tip end section of the pin 79b protrudes from the holder 79a, and a spring (not shown) inside the holder 79a biases the pin 79b in the protruding direction. The tip end face of the pin 79b has a curved shape protruding outward. The tip end faces of the pins 79b and 79b are opposed to each other, and each grip pin unit 79 is inserted into each holding cylinder 78 and secured thereto. The pins 79b and 79b are used to mount and dismount the tool holder 11 (the tool held in the tool holder 11).

The lower side of the tapered mounting section 12 of the tool holder 11 has a groove 11a around the entire circumference thereof. When the tool holder 11 is inserted between the pins 79b and 79b, the pins 79b and 79b are fitted in the groove 11a, thereby holding the tool holder 11.

As the grip arm 70 is rocked clockwise, the grip pin units 79 and 79 get away from the spindle head 32, whereby the grip pin units 79 and 79 do not interfere with the spindle head 32.

The first cam follower 71 making contact with the approaching cam 61 is provided above the arm shaft 77. The first cam follower 71 protrudes upward. The first cam follower 71 is a circular roller and rotates around an axis in parallel with the arm shaft 77. The second cam follower 72 making contact with the separating cam 62 is provided near the arm shaft 77 of the arm section 76. The second cam follower 72 is a circular roller and rotates around an axis in parallel with the arm shaft 77.

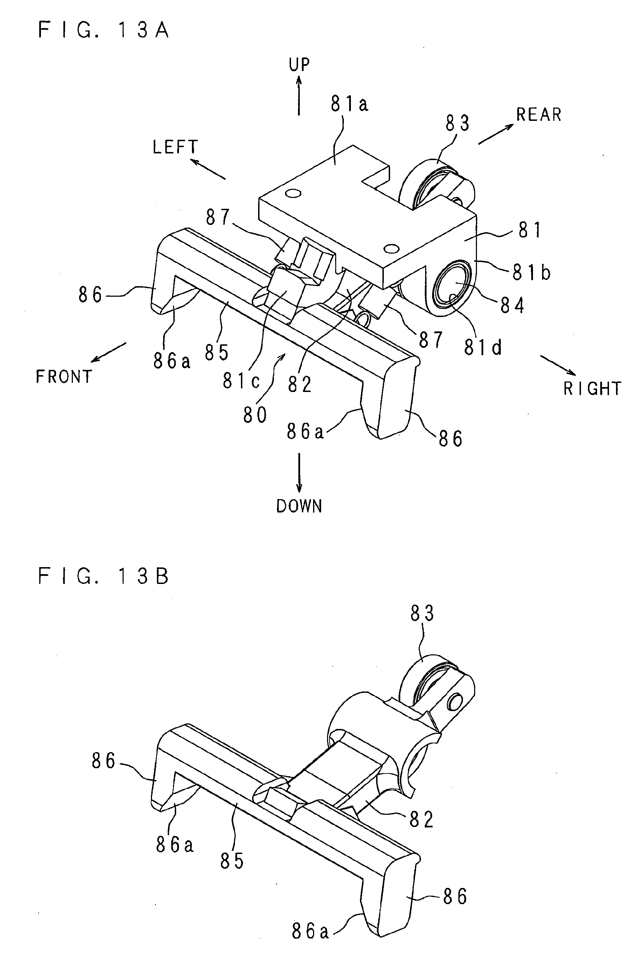

As shown in FIGS. 6, 10, and 13, a positioning mechanism 80 is provided on the rail base 41b. The positioning mechanism 80 is used to align the positions of the tool and the spindle 34. The positioning mechanism 80 has a base 81 secured to the lower end section of the rail base 41b. The lower end section of the rail base 41b is located at the exchange position.

The base 81 has a mounting plate 81a, extension sections 81b and 81b, and the pin receiving section 81c.

The mounting plate 81a has a rectangular upper face, and the upper face is secured to the lower face of the lower end section of the rail base 41b. The pin receiving section 81c is L-shaped in side view and has a portion extending downward from the front section of the mounting plate 81a and a portion protruding forward from the tip end of the portion in parallel with the front-rear direction.

The extension sections 81b and 81b extend downward respectively from both side sections of the mounting plate 81a. The extension sections 81b and 81b have a block shape and are opposed to each other. Positioning shaft holes 81d and 81d passing through the extension sections 81b and 81b are provided at the lower ends of the extension sections 81b and 81b. The axial centers of the positioning shaft holes 81d and 81d are coincident with each other. A rotation rod 82 is provided between the extension sections 81b and 81b so as to intersect the axial centers of the positioning shaft holes 81d and 81d. The rotation rod 82 is inclined so that its front side is inclined downward.

The rotation rod 82 is provided with a rotation shaft 84 that is nearly orthogonal to the rotation rod 82. The rotation shaft 84 is rotatably inserted into the two positioning shaft holes 81d and 81d. The rear end section of the rotation rod 82 rotatably supports the positioning cam follower 83. The positioning cam follower 83 is a cylindrical roller that is rotatable around an axis in parallel with the rotation shaft 84. The front end section of the rotation rod 82 is provided with a rod member 85 extending in parallel with the rotation shaft 84. The rod member 85 is connected to the base 81 via springs 87 and 87. The front end section of the rotation rod 82 is connected to the central section of the rod member 85.

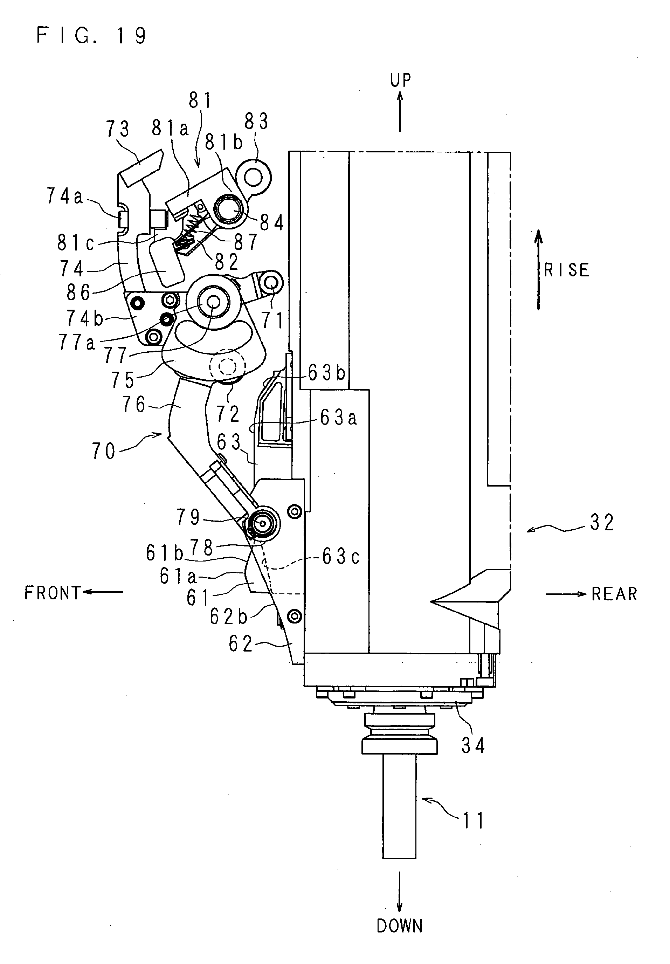

Both end sections of the rod member 85 are respectively provided with positioning pieces 86 and 86 extending downward. Each positioning piece 86 has a block shape. The positioning pieces 86 and 86 are opposed to each other, and the opposed portions are respectively provided with inclined faces 86a and 86a. The width of the inclined face 86a of the positioning piece 86 in the left-right direction decreases toward the lower end thereof. The inclination angle of the inclined face 86a is nearly the same as the inclination angle of the taper 77a. The dimension between the positioning pieces 86 and 86 is equal to or slightly larger than the axial dimension of the arm shaft 77. The springs 87 and 87 bias the positioning pieces 86 and 86 clockwise (see FIG. 19) around the rotation shaft 84 in right side view.

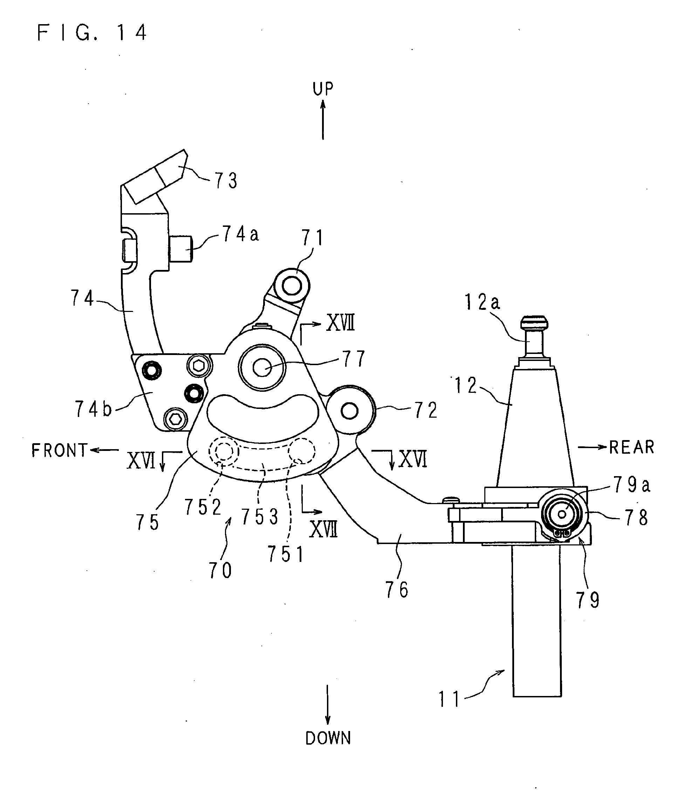

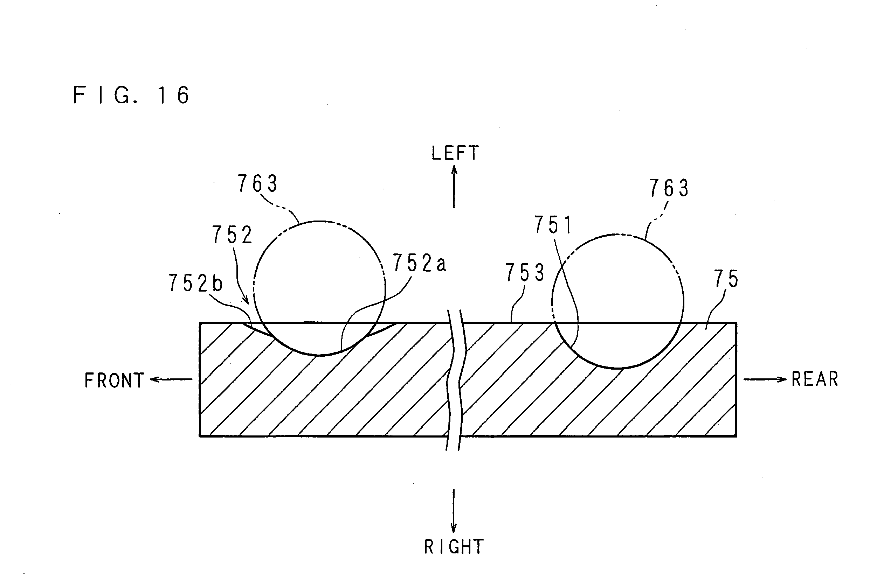

As shown in FIGS. 14 and 16, the guide plate 75 has the first concave section 751 and the second concave section 752 spaced in the front-rear direction at the lower section of the face thereof opposed to the arm section 76.

The first concave section 751 is located in the rear end section of the guide plate 75, and the second concave section 752 is located in the front end section of the guide plate 75. The distance between the arm shaft 77 and the first concave section 751 is equal to the distance between the arm shaft 77 and the second concave section 752.

The guide plate 75 has the flat face 753 connected to the first concave section 751 and the second concave section 752. The flat face 753 has an arc shape in which the distance between the arm shaft 77 and the first cam follower 71 is used as the radius of curvature. The flat face 753 is formed in the rocking direction of the grip arm 70.

The surfaces of the first concave section 751, the second concave section 752, and the flat face 753 are ground so as to be smoother than at least the surfaces of any other sections of the guide plate 75 on the side of the arm section 76. The first concave section 751, the second concave section 752, and the flat face 753 are located on the same arc in which the arm shaft 77 serves as the center of the radius of curvature.

The first concave section 751 has a nearly hemispherical shape and the depth thereof is larger than that of the second concave section 752. The curvature of the first concave section 751 is the same as that of a spherical member 763 described later. The second concave section 752 has a spherical face section 752a having the same radius of curvature as that of the spherical member 763 and a curved face section 752b connected to the fringe portion of the spherical face section 752a and formed along the fringe portion. The radius of curvature of the curved face section 752b is larger than that of the spherical face section 752a. Hence, the second concave section 752 has a step section at the boundary between the curved face sections different in the radius of curvature.

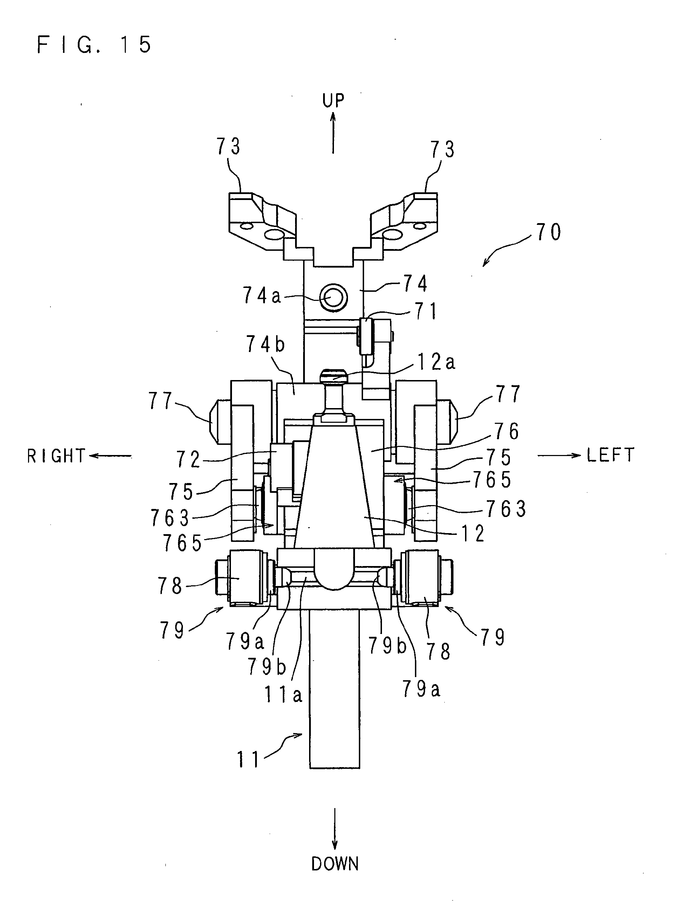

As shown in FIGS. 12 and 15, the side faces of the arm section 76, respectively opposed to the guide plates 75 and 75, have protruding sections 765 and 765 protruding toward the guide plates 75 and 75. The distance between the protruding section 765 and the arm shaft 77 is equal to the distance between the arm shaft 77 and the first concave section 751. The protruding position of the protruding section 765 is between the arm shaft 77 and the grip pin units 79 and 79 and is in the vicinity of the arm shaft 77.

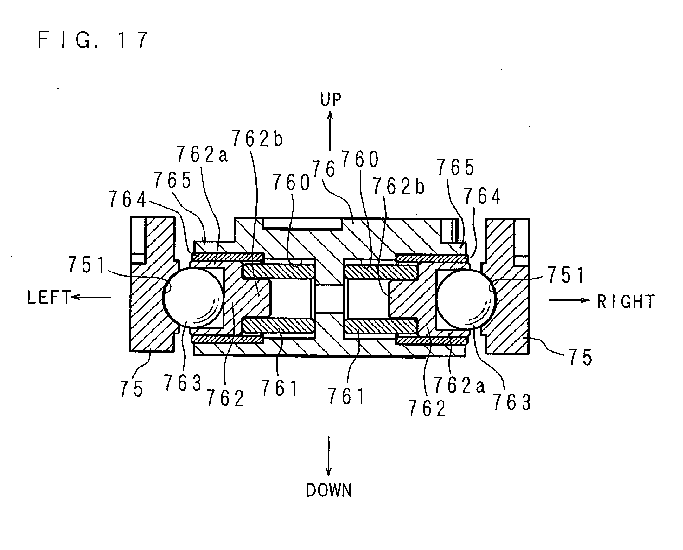

As shown in FIG. 17, the protruding section 765 has an accommodating concave section 760 recessed in a direction (the left-right direction) in parallel with the axial direction of the arm shaft 77. The accommodating concave section 760 accommodates a biasing spring 761, a spherical member holding cylinder 762, and the spherical member 763 (an end portion).

The biasing spring 761 is a compression coil spring placed in a direction parallel with the left-right direction and provided in the deep inner portion of the accommodating concave section 760. The spherical member holding cylinder 762 has a closed cylinder section 762a formed in a direction parallel with the left-right direction and an insertion section 762b that is inserted into the biasing spring 761. The insertion section 762b protrudes from the bottom section of the closed cylinder section 762a to the opposite side of the opening of the closed cylinder section 762a and has a cylindrical shape that is coaxial with the closed cylinder section 762a. The diameter of the insertion section 762b is equal to or smaller than the inside diameter of the biasing spring 761. The axial dimension (the dimension in the left-right direction) of the insertion section 762b is equal to or less than the half of the axial dimension (the dimension in the left-right direction) of the biasing spring 761.

A guide cylinder 764 is fitted in the inside of the opening portion of the accommodating concave section 760. The guide cylinder 764 is used to smooth the movement of the spherical member holding cylinder 762 in the left-right direction. The guide cylinder 764 has a cylindrical shape, and the outside diameter of the closed cylinder section 762a is nearly equal to the inside diameter of the guide cylinder 764.

One end section of the biasing spring 761 is located on the outer circumferential face of the insertion section 762b, and the biasing spring 761 is held between the bottom face of the closed cylinder section 762a and the bottom face of the accommodating concave section 760. The opening portion of the closed cylinder section 762a and the opening portion of the accommodating concave section 760 are located at nearly identical positions in the left-right direction. The closed cylinder section 762a rotatably accommodates the spherical member 763 therein, and a nearly half of the spherical member 763 is located inside the closed cylinder section 762a. The other nearly half of the spherical member 763 protrudes from the opening (the protruding section 765) of the accommodating concave section 760 and makes contact with the guide plate 75.

The spherical member 763 and the spherical member holding cylinder 762 are moved to the deep side of the accommodating concave section 760 while compressing the biasing spring 761. When the biasing spring 761 is restored, the spherical member 763 and the spherical member holding cylinder 762 are moved toward the opening of the accommodating concave section 760. Even when the biasing spring 761 is compressed most densely, the insertion section 762b does not make contact with the bottom face of the accommodating concave section 760.

The guide plates 75 and 75 are secured to the moving carriage 43 via the block 74b and the mounting plates 73 and 73 as described above. The arm section 76 is rocked around the arm shaft 77 in the space between the guide plates 75 and 75. The distance between the protruding section 765 (the accommodating concave section 760) and the arm shaft 77 is equal to the distance between the arm shaft 77 and the first concave section 751, and the first concave section 751, the second concave section 752, and the flat face 753 are located on the same arc in which the arm shaft 77 serves as the center of the radius of curvature. When the arm section 76 is rocked around the arm shaft 77 serving as the center axis of the rocking, the spherical member 763 is opposed to and makes contact with the first concave section 751, the second concave section 752, and the flat face 753, and rolls on the flat face 753. Hence, the guide plates 75 and 75 guide the rocking of the grip arm 70. The biasing spring 761 presses the spherical member 763 to the first concave section 751, the second concave section 752, and the flat face 753 at all times, whereby the spherical member 763 does not fall out from the accommodating concave section 760 during the rocking of the grip arm 70.

As described above, the first concave sections 751, the second concave sections 752, the flat faces 753, and the spherical members 763, respectively two in number, are used. Even if one of the spherical members 763 becomes defective due to attachment of chips, coolant, or the like, the other spherical member 763 can continuously guide the rocking of the grip arm 70. Hence, the machine tool 100 can be improved in reliability.

As shown in FIGS. 14 and 17, when the grip arm 70 grips the tool holder 11, each spherical member 763 is fitted in each first concave section 751. When each spherical member 763 is fitted in each first concave section 751 at the exchange position, each grip pin unit 79 is closest to the tapered bore 34a. While each spherical member 763 is fitted in each first concave section 751, even if the grip arm 70 is moved by the rotation of the tool magazine 40, each spherical member 763 does not move away from each first concave section 751, whereby the grip arm 70 can maintain its posture.

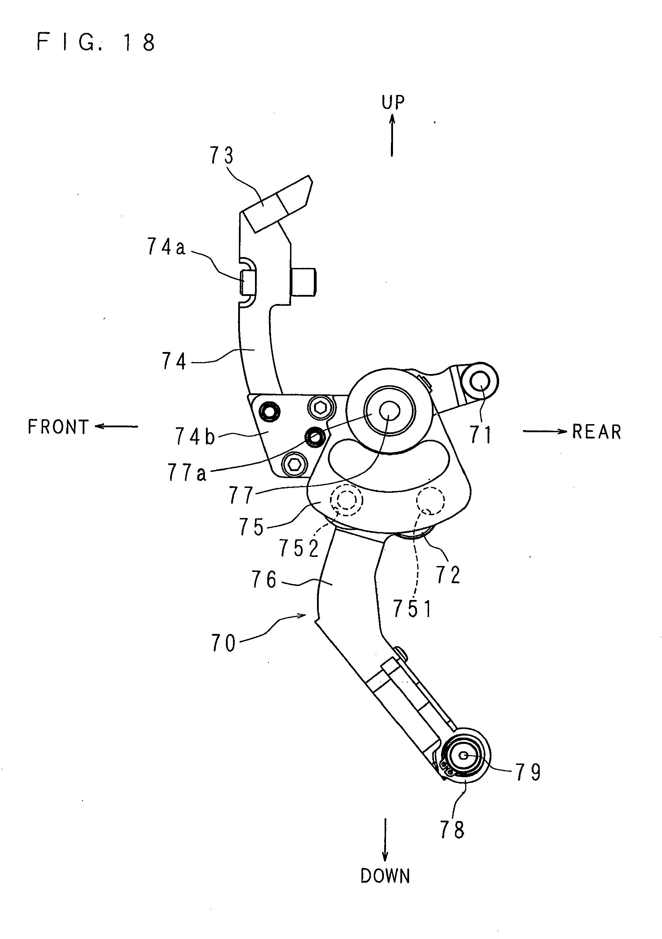

As shown in FIG. 18, when the grip arm 70 does not grip the tool holder 11 and stands by at the exchange position, each spherical member 763 is fitted in each second concave section 752. When each spherical member 763 is fitted in each second concave section 752, each grip pin unit 79 is most away from the tapered bore 34a. When each spherical member 763 is fitted in the second concave section 752, the grip arm 70 can maintain its posture at the exchange position.

When the cam face 61b of the approaching cam 61 makes contact with the first cam follower 71 of the grip arm 70 while the grip arm 70 has the posture shown in FIG. 18, the arm section 76 is rocked counterclockwise around the arm shaft 77 serving as the center of the rocking by the force exerted from the cam face 61b to the first cam follower 71, and each spherical member 763 can get out of each second concave section 752 easily. Each spherical member 763 having gotten out of each second concave section 752 rolls on each flat face 753 and moves toward each first concave section 751. Since the second concave section 752 is shallower than the first concave section 751 and the inclination of the curved face section 752b is smaller than that of the spherical face section 752a as shown in FIG. 16, the spherical member 763 can get out of the second concave section 752 more easily than getting out of the first concave section 751. The grip arm 70 shown in FIG. 18 corresponds to the grip arm 70 shown in FIG. 19.

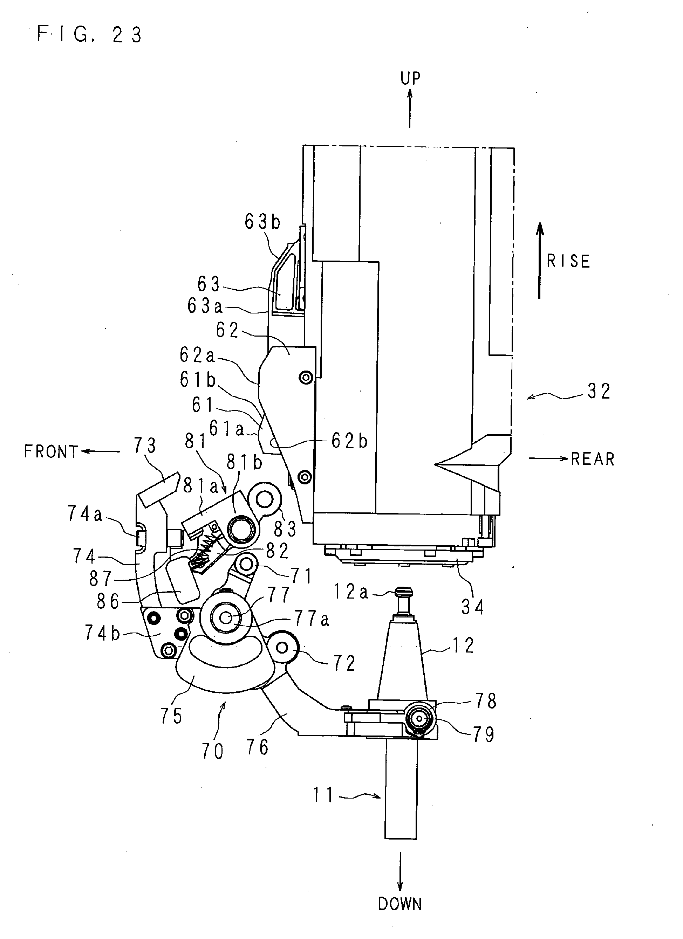

When the cam face 62b of the separating cam 62 makes contact with the second cam follower 72 of the grip arm 70 while the grip arm 70 has the posture shown in FIG. 14, the arm section 76 is rocked clockwise around the arm shaft 77 serving as the center of the rocking by the force exerted from the cam face 62b to the second cam follower 72, and each spherical member 763 can get out of each first concave section 751. Each spherical member 763 having gotten out of each first concave section 751 rolls on each flat face 753 and is moved toward each second concave section 752. The grip arm 70 shown in FIG. 14 corresponds to the grip arm 70 shown in FIG. 23.

As shown in FIG. 19, when work machining is completed, the tool holder 11 is mounted in the spindle 34. At this time, one of the grip arms 70, 70, ... stands by at the exchange position. No tool holder 11 is gripped by the grip arm 70. The arm section 76 orients the holding cylinders 78 and 78 downward.

The first cam follower 71, the second cam follower 72, and the positioning cam follower 83 do not make contact with the approaching cam 61, the separating cam 62, and the positioning cam 63. The positioning cam follower 83 protrudes rearward and obliquely upward from the rotation shaft 84 so as to be opposed to the upper cam face 63b. The first cam follower 71 protrudes rearward and obliquely upward from the arm shaft 77 so as to be opposed to the cam face 61b. The first cam follower 71 is located on the rear side of the positioning cam follower 83. The second cam follower 72 is located on the front side of the positioning cam follower 83, and the position of the rear end of the second cam follower 72 in the front-rear direction is approximately equal to the position of the apex section 62a.

The rotation rod 82 protrudes forward and obliquely downward from the rotation shaft 84, and the positioning pieces 86 and 86 are provided at the tip end section thereof. Each positioning piece 86 is located forward and obliquely upward from the arm shaft 77.

As described above, each spherical member 763 is fitted in each second concave section 752 (see FIG. 16), and the grip arm 70 maintains its posture in which each holding cylinder 78 is oriented downward.

After machining is completed, the spindle head 32 rises from the machining position to the exchange position (see the arrow shown in FIG. 19).

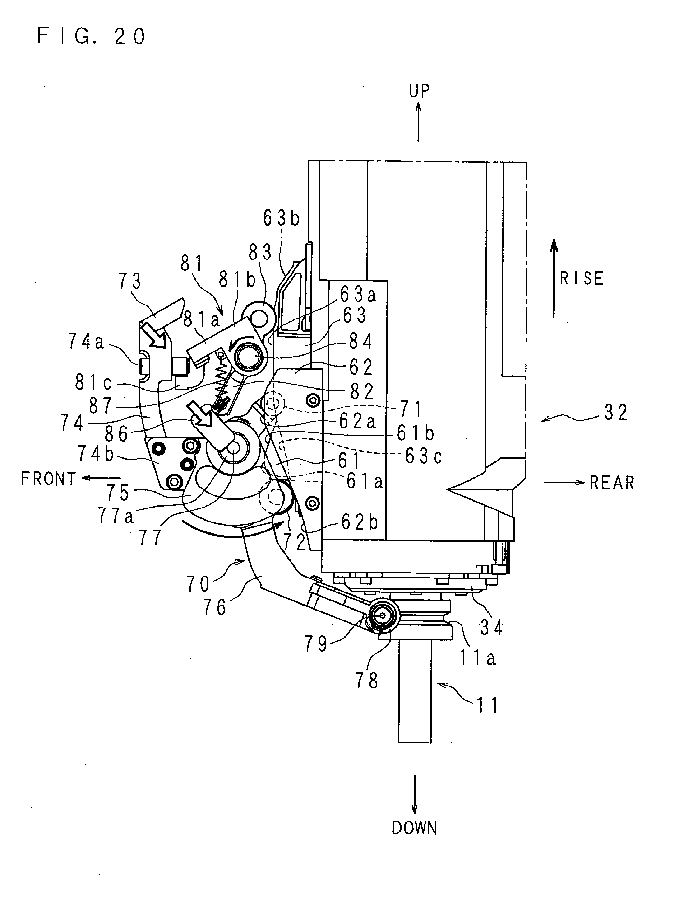

The spindle head 32 rises further and the positioning cam follower 83 makes contact with the upper cam face 63b of the positioning cam 63. As shown in FIG. 20, as the spindle head 32 rises, the positioning cam follower 83 moves downward on the upper cam face 63b of the positioning cam 63. Since the height of the upper cam face 63b of the positioning cam 63 increases in the downward direction from its upper end, the positioning cam 63 exerts a forward force to the positioning cam follower 83. By this force, the rotation rod 82 is rotated counterclockwise (see the arrow shown in FIG. 20) around the rotation shaft 84 against the elastic forces of the springs 87 and 87. The positioning pieces 86 and 86 are opposed to both end sections of the arm shaft 77 so as to hold the arm shaft 77 therebetween in the axial direction.

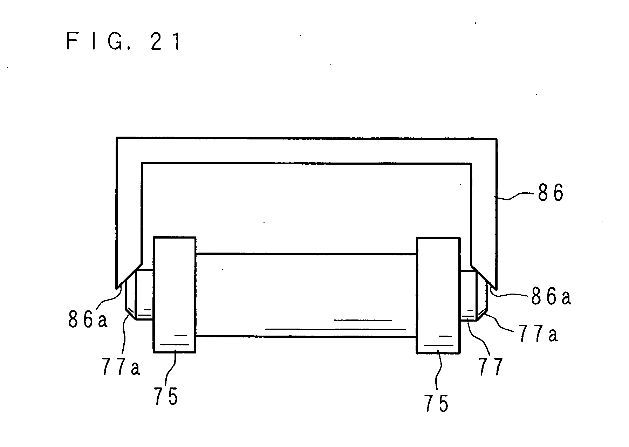

As shown in FIG. 21, when the position of the arm shaft 77 deviates from a predetermined position (the position in which the spindle 34 is aligned with the arm shaft 77 during tool exchange) in the axial direction (the left-right direction), the inclined face 86a of the positioning piece 86 makes contact with the taper 77a of the arm shaft 77, whereby a force is exerted to the arm shaft 77 in the axial direction. While the grip arm 70 is supported by the rail base 41b to which the base 81 is secured (see FIG. 6), the positioning of the arm shaft 77 in the axial direction is completed.

Since the positioning pieces 86 and 86 make contact with the arm shaft 77 as indicated by a hollow arrow shown in FIG. 20, the force exerted rearward and obliquely downward is applied to the entire grip arm 70, and the positioning pin 74a makes contact with the pin receiving section 81c. The tip end of the positioning pin 74a makes contact with a portion of the pin receiving section 81c that is oriented in parallel with the up-down direction. The lower section of the positioning pin 74a makes contact with a portion of the pin receiving section 81c that is oriented in parallel with the front-rear direction. Hence, the grip arm 70 is positioned in the up-down direction and the front-rear direction. The first cam follower 71 is located on the cam face 61b of the approaching cam 61. The second cam follower 72 is located on the cam face 62b of the separating cam 62.

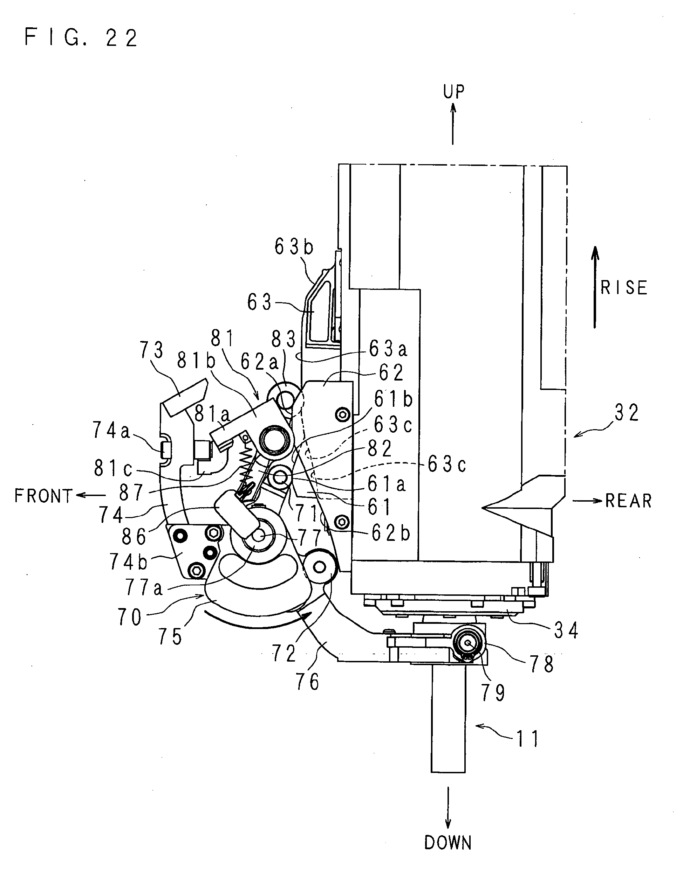

As indicated by the arrows shown in FIGS. 20 and 22, after the positioning of the grip arm 70 in the axial direction of the arm shaft 77 is completed, the spindle head 32 in which the tool holder 11 (tool) is mounted is raised further. The first cam follower 71 moves downward on the cam face 61b of the approaching cam 61. Since the height of the cam face 61b increases in the downward direction from its upper end in a tapered shape, the approaching cam 61 exerts a forward force to the first cam follower 71, and the grip arm 70 is rocked counterclockwise around the arm shaft 77 serving as the center of the rocking. At this time, each spherical member 763 gets out of each second concave section 752 and rolls on each flat face 753 and moves toward each first concave section 751. The grip pin units 79 and 79 move close to the tool holder 11 (more specifically, the tool holder 11 mounted in the spindle 34 by fitting the tapered mounting section 12 into the tapered bore 34a). The pins 79b and 79b of the grip pin units 79 and 79 are fitted into the groove 11a of the tool holder 11, whereby the grip arm 70 grips the tool holder 11. The positioning cam follower 83 moves on the flat section 63a of the positioning cam 63, the positioning cam 63 exerts a forward force to the positioning cam follower 83and the grip arm 70 is maintained the positioning of the arm shaft 77 in the axial direction. The second cam follower 72 moves on the cam face 62b. Since the height of the cam face 62b decreases in the downward direction in a tapered shape, the separating cam 62 does not exert any forward force to the second cam follower 72.

As indicated by the arrow shown in FIG. 23, after the grip arm 70 gripped the tool holder 11, the spindle head 32 rises further and the tool holder 11 is removed from the spindle 34. The first cam follower 71, the second cam follower 72, and the positioning cam follower 83 move away from the approaching cam 61, the separating cam 62, and the positioning cam 63. The rotation rod 82 is rotated clockwise by the elastic restoring forces of the springs 87 and 87. Each spherical member 763 is fitted into each first concave section 751 as described above (see FIGS. 14 and 16). Then, the tool magazine 40 conveys the grip arm 70 having gripped another tool holder 11 to the exchange position. Even when the grip arm 70 is moved by the rotation of the tool magazine 40, each spherical member 763 does not get out of each first concave section 751, whereby the grip arm 70 can maintain its posture.

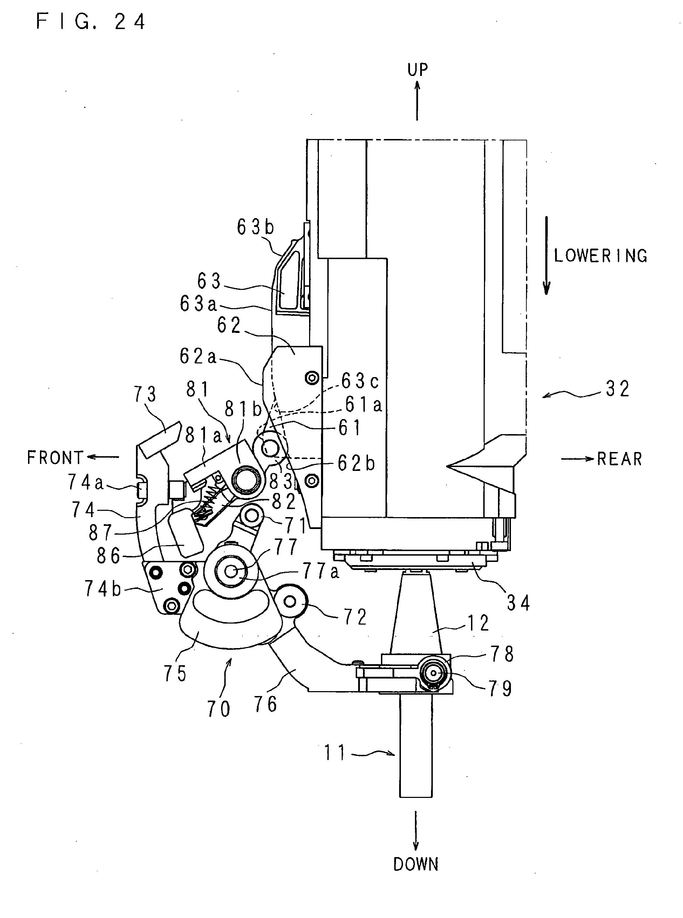

As indicated by the arrow shown in FIG. 24, after grip arm 70 having gripped the other tool holder 11 is conveyed to the exchange position, the spindle head 32 starts lowering. The positioning cam follower 83 makes contact with the lower end section of the positioning cam 63. As the spindle head 32 lowers, the positioning cam follower 83 moves upward on the lower cam face 63c of the positioning cam 63. Since the height of the lower cam face 63c increases in the upward direction from its lower end, the positioning cam 63 exerts a forward force to the positioning cam follower 83.

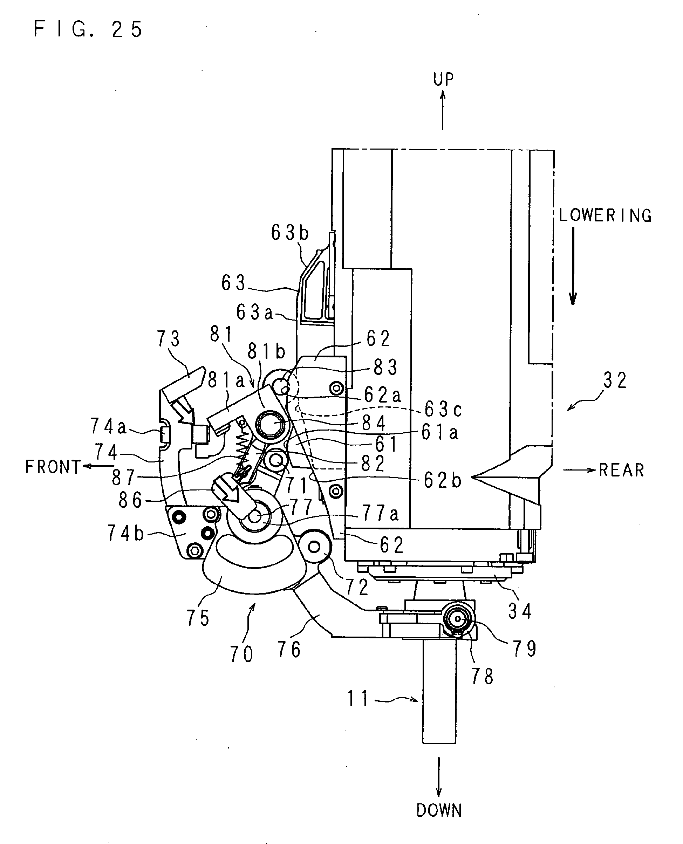

As shown in FIG. 25, the spindle head 32 lowers further. As indicated by the hollow arrow shown in FIG. 25, the rotation rod 82 is rotated counterclockwise around the rotation shaft 84 against the elastic forces of the springs 87 and 87. The positioning pieces 86 and 86 are opposed to both end sections of the arm shaft 77 so as to hold the arm shaft 77 therebetween in the axial direction. As described above, the positioning of the grip arm 70 is completed in the axial direction of the arm shaft 77

When the grip arm 70 is conveyed by rotating the tool magazine 40 so that the grip arm 70 is placed at the exchange position, for example, the grip arm 70 may sometimes be positioned at a position deviating from the exchange position due to the accumulated dimensional tolerance of the link members 44, 44, ... The base 81 is secured to the rail base 41b, and the grip arm 70 is mounted on the moving carriage 43 so that the arm shaft 77 is oriented along the rail 41c. Hence, the deviation in the direction along the rail 41c can be eliminated and the position of the grip arm 70 can be aligned with that of the spindle 34 by performing the positioning of the arm shaft 77 in the axial direction using the positioning pieces 86 and 86.

Since the positioning pieces 86 and 86 make contact with the arm shaft 77 as indicated by a hollow arrow shown in FIG. 25, the force exerted rearward and obliquely downward is applied to the entire grip arm 70, and the positioning pin 74a makes contact with the pin receiving section 81c. The tip end of the positioning pin 74a makes contact with the portion of the pin receiving section 81c that is oriented in parallel with the up-down direction. The lower section of the positioning pin 74a makes contact with the portion of the pin receiving section 81c that is oriented in parallel with the front-rear direction. Hence, the grip arm 70 is positioned in the up-down direction and in the front-rear direction.

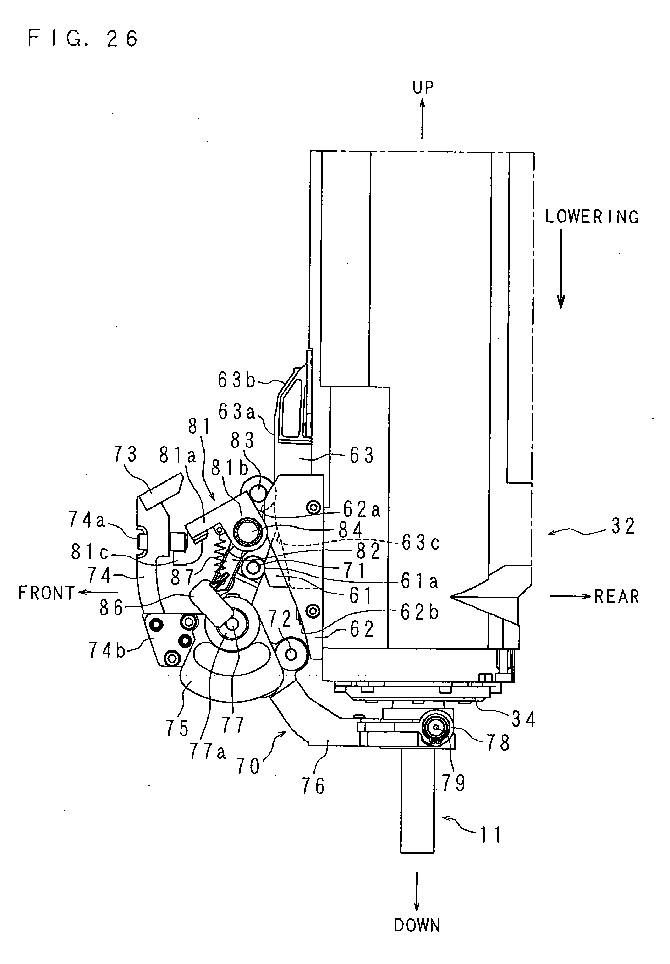

As shown in FIG. 26, after the positioning of the grip arm 70 is completed, the spindle head 32 lowers further. At this time, the tool holder 11 gripped by the grip arm 70 is mounted in the spindle 34. The second cam follower 72 makes contact with the lower end section of the separating cam 62. The first cam follower 71 makes contact with the apex 61a. The positioning cam follower 83 makes contact with the flat section 63a.

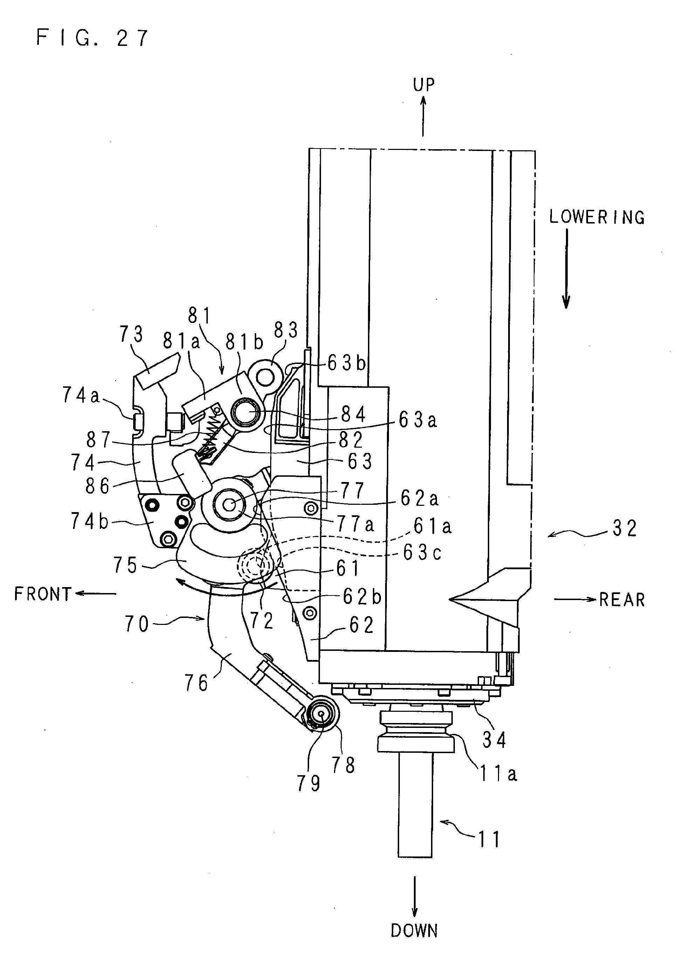

As shown in FIG. 27, the spindle head 32 lowers further. As the spindle head 32 lowers, the second cam follower 72 moves upward on the cam face 62b of the separating cam 62. Since the height of the cam face 62b increases in the upward direction from the lower end in a tapered shape, the separating cam 62 exerts a forward force to the second cam follower 72. As indicated by the arrow shown in FIG. 27, the grip arm 70 is rocked clockwise around the arm shaft 77 serving as the center of the rocking, and the grip pin units 79 and 79 are separated from the tool holder 11. As described above, each spherical member 763 gets out of each first concave section 751 and rolls on each flat face 753 and moves toward each second concave section 752.

The first cam follower 71 moves upward on the cam face 61b. Since the height of the cam face 61b lowers in the upward direction in a tapered shape, the approaching cam 61 does not exert any forward force to the first cam follower 71. The positioning cam follower 83 moves upward on the upper cam face 63b. Since the height of the cam face 63b lowers in the upward direction in a tapered shape, the positioning cam 63 does not exert any forward force to the positioning cam follower 83.

The spindle head 32 in which the tool holder 11 is mounted lowers further and moves toward the machining position. The grip arm 70 is rocked further clockwise, and the grip pin units 79 and 79 get away from the spindle head 32, whereby the grip arm 70 does not interfere with the spindle head 32. The first cam follower 71, the second cam follower 72, and the positioning cam follower 83 move away from the approaching cam 61, the separating cam 62 and the positioning cam 63. Each spherical member 763 is fitted into each second concave section 752, and the grip arm 70 takes the posture shown in FIG. 19.

The machine tool 100 according to this embodiment is provided with the positioning mechanism 80 having the positioning cam follower 83 and the positioning pieces 86 and 86. Since the spindle head 32 moves between the machining position and the exchange position at the time of tool exchange, the positioning cam 63 provided on the spindle head 32 makes contact with the positioning cam follower 83. The positioning cam 63 exerts a force to the positioning cam follower 83, and the positioning pieces 86 and 86 are moved toward the arm shaft 77 of the grip arm 70. The positioning pieces 86 and 86 perform the positioning of the grip arm 70 in the axial direction of the arm shaft 77. Then, the machine tool 100 exchanges the tool holder 11 (tool). Since tool exchange is performed after the positioning of the grip arm 70 is completed, the tool is securely mounted in the spindle head 32 and is prevented from falling out from the spindle head 32. For this reason, in the machine tool 100, the tool or the spindle 34 can be prevented from being broken during work machining.

When the positioning cam 63 exerts a force to the positioning cam follower 83, the rotation rod 82 is rotated around the rotation shaft 84 serving as a fulcrum. The positioning pieces 86 and 86 are opposed to both end sections of the arm shaft 77 and restrict the position of the arm shaft 77 in the axial direction, whereby the grip arm 70 can be positioned in the axial direction.

The tapers 77a and 77a are formed at the end sections of the arm shaft 77, and the inclined faces 86a and 86a adapted to the shape of the tapers 77a and 77a are formed at the positioning pieces 86 and 86. For example, the inclination angle of the taper 77a is designed so as to be nearly equal to that of the inclined face 86a. When the rotation rod 82 is rotated and the positioning pieces 86 and 86 move close to both end sections of the arm shaft 77, the positioning pieces 86 and 86 smoothly make contact with the arm shaft 77, whereby the positioning of the grip arm 70 can be accomplished smoothly.

The positioning pin 74a makes contact with the pin receiving section 81c and can perform the positioning of the grip arm 70 in a direction intersecting the axial direction (the left-right direction) of the arm shaft 77. The positioning pin 74a protrudes in one direction (the front-rear direction) orthogonal to the axial direction of the arm shaft 77 and makes contact with the pin receiving section 81c in the two directions (the front-rear direction and the up-down direction) orthogonal to the axial direction, whereby the grip arm 70 can be positioned in the above-mentioned two directions. The positioning pin 74a should only protrude in a direction intersecting the axial direction, and the protruding direction of the positioning pin 74a is not limited to the direction orthogonal to the axial direction of the arm shaft.

When the spindle head 32 in which a tool is mounted is moved from the machining position to the exchange position, the grip arm 70 in which no tool is gripped is positioned, and then the grip pin units 79 and 79 of the grip arm 70 move close to the spindle head 32 and grip the tool. Hence, the position of the grip arm 70 is aligned with that of the spindle 34, whereby the grip arm 70 can securely grip the tool mounted in the spindle 34 and can dismount the tool from the spindle 34.

After the tool is dismounted from the spindle head 32, the tool magazine 40 conveys another grip arm 70 in which a tool is gripped to the exchange position. The spindle head 32 starts moving from the exchange position to the machining position, and the positioning of the grip arm 70 is performed. The grip pin units 79 and 79 of the grip arm 70 move close to the spindle head 32 and mount the tool in the spindle 34. Since the tool is mounted after the position of the grip arm 70 is aligned with that of the spindle 34, the tool can be securely mounted in the spindle 34. After the tool is mounted in the spindle 34, the grip pin units 79 and 79 of the grip arm 70 move away from the spindle head 32.

The guide plates 75 and 75 are disposed on both sides of the arm section 76 in the axial direction. Hence, the size of the grip arm 70 alone in the axial direction is larger than that of the conventional grip arm that is not equipped with the guide plates 75 and 75.

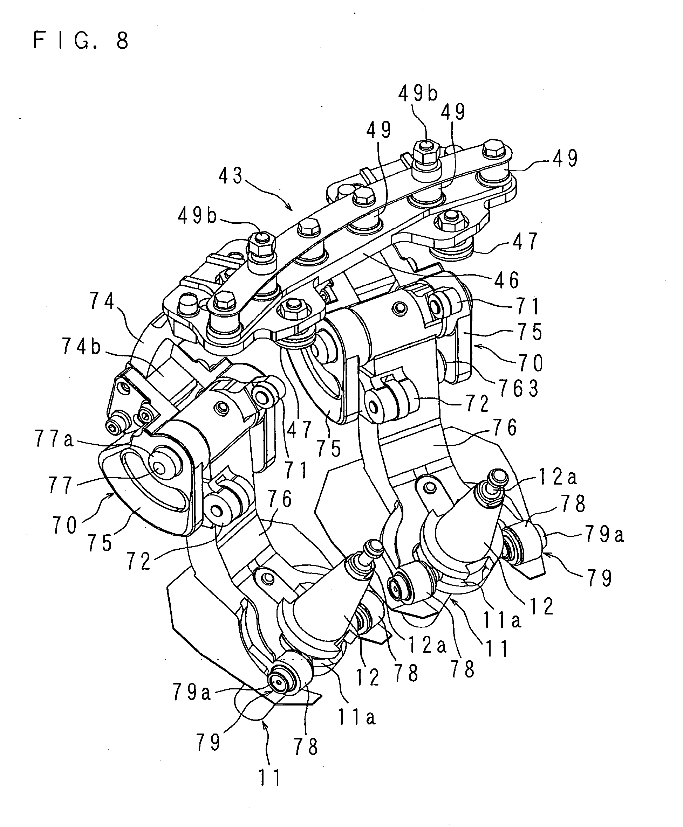

Since the above-mentioned spatial margins are sufficiently present on both sides of the grip arm 70 in the axial direction (see FIGS. 8 and 9), there is no particular problem. Although the grip arm 70 is equipped with the guide plates 75 and 75, the tool exchanging device 10 and the machine tool 100 do not increase in size unreasonably.

Since each guide plate 75 for rockably supporting the grip arm 70 and each flat face 753 for guiding the rocking of the grip arm 70 are provided integrally, the configuration of the machine tool 100 can be more compact in size.

Since the distance between the arm shaft 77 and the grip pin units 79 and 79 is sufficiently long, even if the protruding sections 765 and 765 are provided between the arm shaft 77 and the grip pin units 79 and 79, the grip arm 70 is not made particularly large.

If the grip arm 70 is not equipped with the guide plates 75 and 75 and the protruding sections 765 and 765, it is conceived, for example, that the grip arm 70 is equipped with the conventional components, that is, the guide face, the steel ball sliding on the guide face, and the compression coil spring for biasing the steel ball toward the guide face, on the opposite side (the side on which the block 74b is provided) of the grip pin units 79 and 79 via the arm shaft 77 of the grip arm 70 to guide the rocking of the grip arm 70. In this case, the side of the grip arm 70 on which the block 74b is provided cannot be made compact.

Since the biasing spring 761 is accommodated in the accommodating concave section 760 and the spherical member holding cylinder 762 for holding the spherical member 763 is engaged with the biasing spring 761, foreign matter, such as chips, does not enter the biasing spring 761. Since the tip end portion is formed of the spherical member 763, the guide faces 753 and 756 are hardly damaged.

Since the spherical member holding cylinder 762 can move smoothly in the axial direction by virtue of the guide cylinder 764, the rocking of the grip arm 70 becomes further smoother.

### Embodiment 2

The configuration of a machine tool according to Embodiment 2 is nearly the same as that of the machine tool 100 according to Embodiment 1. The differences between Embodiment 1 and Embodiment 2 will be described below, and components that are other than those relating to the differences and correspond to those of Embodiment 1 are designated by the same reference codes and their descriptions are omitted.

A guide plate 75 according to Embodiment 2 will be described.

The guide plate 75 is provided with a concave section 754, a non-concave section (contact section) 755 and a flat face 756 instead of the first concave section 751, the second concave section 752, and the flat face 753 according to Embodiment 1. The surfaces of the concave section 754, the non-concave section 755, and the flat face 756 are ground so as to be smoother than at least the surfaces of any other sections of the guide plate 75 on the side of the arm section 76.

When the arm section 76 is rocked around the arm shaft 77 serving as the center axis of the rocking, the spherical member 763 is opposed to and makes contact with the concave section 754, the non-concave section 755, and the flat face 756, and rolls on the flat face 756.

The concave sections 754, the non-concave sections 755, the flat faces 756, and the spherical members 763, respectively two in number, are used.

The positions where the concave section 754 and the flat face 756 are formed correspond to the positions where the first concave section 751 and the flat face 753 according to Embodiment 1 are formed. The functions of the concave section 754 and the flat face 756 are similar to those of the first concave section 751 and the flat face 753 according to Embodiment 1.

The spherical member 763 rolls on the flat face 756 while drawing an arc-shaped locus centered at the center point of the arm shaft hole 75a. The concave section 754 is a nearly semicircular groove in cross section and extends from the lower end of the guide plate 75 toward the arm shaft hole 75a. Hence, even if the position of the spherical member 763 deviates to some extent in the radial direction of the arm shaft hole 75a, the insertion of the spherical member 763 into the concave section 754 and the removal of the spherical member 763 from the concave section 754 are performed smoothly.

Although the position where the non-concave section 755 is formed corresponds to the position where the second concave section 752 according to Embodiment 1 is formed, the function of the non-concave section 755 is different from the function of the second concave section 752 according to Embodiment 1.

The non-concave section 755 has an inclined face 755a. The inclined face 755a is inclined in a tapered shape in a direction of moving close to the arm section 76 (that is, to the grip arm 70) as moving away from the concave section 754.

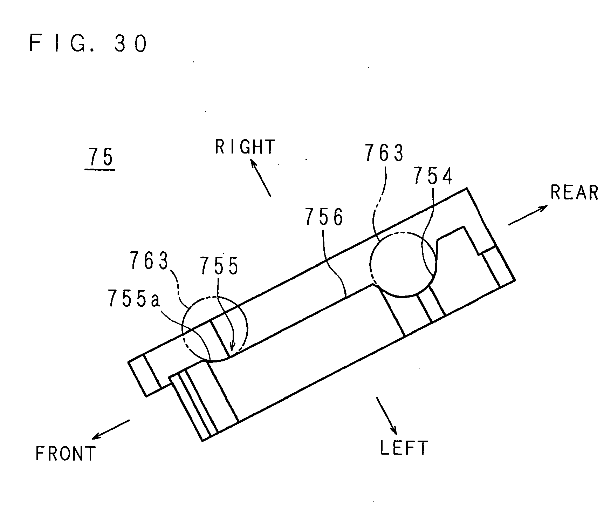

When the grip arm 70 is in its stopped state while taking the posture shown in FIG. 14, each spherical member 763 is fitted in each concave section 754 (see FIG. 30). When the grip arm 70 is in its stopped state at the exchange position, each spherical member 763 is fitted in each concave section 754, and each grip pin unit 79 is closest to the tapered bore 34a. When each spherical member 763 is inserted into each concave section 754, even if the grip arm 70 is moved by the rotation of the tool magazine 40, the spherical member 763 does not get out of the concave section 754, whereby the grip arm 70 can maintain its posture.

When the cam face 62b of the separating cam 62 makes contact with the second cam follower 72 of the grip arm 70 as the spindle head 32 lowers, the arm section 76 is rocked clockwise around the arm shaft 77 serving as the center of the rocking by the force exerted from the cam face 62b to the second cam follower 72, and each spherical member 763 gets out of each concave section 754. The spherical member 763 getting out of the concave section 754 rolls on the flat face 756 and moves toward the non-concave section 755.

The rocking of the arm section 76 stops when the spindle head 32 stops. At this time, each spherical member 763 makes contact with each non-concave section 755 and stops. Even when the arm section 76 cannot stop simultaneously with the stop of the spindle head 32 but is likely to be rocked further, for example, the spherical member 763 being likely to roll on the inclined face 755a of each non-concave section 755 is gradually subjected to a force from the inclined face 755a, whereby the arm section 76 is gradually decelerated and stopped. At this time, the grip pin units 79 and 79 of the grip arm 70 are in a state of being most away from the tapered bore 34a. Hence, even if the grip arm 70 is rocked to some extent or if the position of the grip arm 70 in the rocking direction cannot be determined accurately, there is no particular problem.

In the configuration according to Embodiment 1, when each spherical member 763 enters each second concave section 752, a force abruptly rocking the arm section 76 is exerted to the arm section 76 sometimes. At this time, the second cam follower 72 is subjected to a force from the separating cam 62. Hence, the smooth rocking of the arm section 76 is inhibited by the entry of the spherical member 763 into the second concave section 752, whereby unnecessary vibration may occur or the second cam follower 72 may move away from the separating cam 62.

However, since the second concave section 752 does not exist in the configuration of Embodiment 2, the problem described above does not occur.

When the cam face 61b of the approaching cam 61 makes contact with the first cam follower 71 of the grip arm 70, the arm section 76 is rocked counterclockwise around the arm shaft 77 serving as the center of the rocking by the force exerted from the cam face 61b to the first cam follower 71, whereby each spherical member 763 easily moves away from each non-concave section 755. Since such an action in which each spherical member 763 gets out of each concave section 754 does not occur at this time, the arm section 76 starts rocking smoothly. In particular, when each spherical member 763 has stopped on the inclined face 755a of each non-concave section 755, the force exerted to each spherical member 763 from the inclined face 755a disappears gradually as the spherical member 763 rolls, whereby the arm section 76 is gradually accelerated. Hence, the inclined face 755a can allow the arm section 76 to be rocked smoothly.

Each spherical member 763 having gotten away from each non-concave section 755 rolls on each flat face 756 and moves toward each concave section 754.

### Embodiment 3

The configuration of a machine tool according to Embodiment 3 is nearly identical to that of the machine tool 100 according to Embodiment 1, except for the configuration of the protruding section 765. Components corresponding to those according to Embodiment 1 are designated by the same reference codes and their descriptions are omitted.

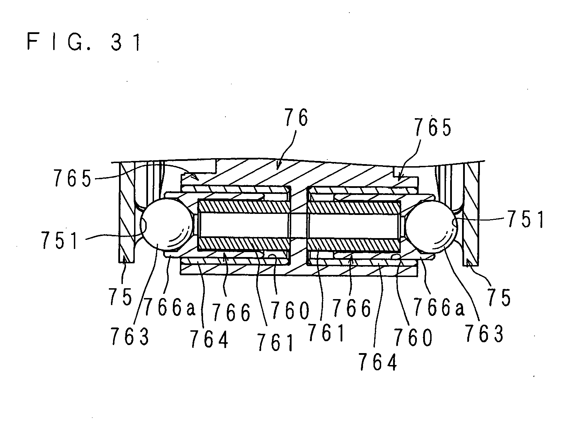

As shown in FIG. 31, in this changed embodiment, the shape of the spherical member holding cylinder 762 is changed. A spherical member holder 766 is formed into a cylindrical shape, having a spherical member holding section (a closed cylindrical section) 766a on the side of one end (on the side of the opening of the accommodating concave section 760) to hold the spherical member 763 and a hollow section on the side of the other end to accommodate the biasing spring 761. The spherical member holding section 766a is formed into a concave shape and has an inclined face formed along the shape of the spherical member 763 and a wall section extending outward in the axial direction of the accommodating concave section 760 from the end section of the inclined face. The central portion of the bottom section of the spherical member holding section 766a is open.

With the above-mentioned configuration, the spherical member holding section 766a holds the spherical member 763 favorably and the spherical member 763 rolls favorably.

## Claims

1. A machine tool (100) comprising:
a grip arm (70) having an arm section (76), a support section (75) for rockably supporting the arm section (76), a tool gripping section (79) for removably gripping a tool and a cam follower (71, 72),
a spindle (34) in which the tool gripped by the grip arm (70) is removably mounted in a tool mounting section (34a) so that work is machined,
a spindle head (32) holding the spindle (34) rotatably,
a cam mechanism (60) which is installed on the spindle head (32) and makes contact with the cam follower (71, 72), and
a conveying section (10) for conveying the grip arm (70) to an exchange position in which the tool mounted in the spindle (34) is exchanged, wherein
the spindle (34) is movable between a machining position in which work is machined and the exchange position,
the grip arm (70) conveyed to the exchange position is rockable by a cam operation of the cam mechanism (60) and the cam follower (71, 72) as the spindle (34) is moved so that the tool gripping section (79) is movable close to and away from the tool mounting section (34a),
the support section (75) has a guide face (753, 756) formed along the rocking direction of the arm section (76), the guide face (753, 756) is adapted to guide the rocking of the grip arm (70), and
between a rocking center shaft (77) of the arm section (76) and the tool gripping section (79), the arm section (76) has a protruding section (765) which protrudes in a direction along the axial direction of the center shaft(77) and a tip end portion (763) of which slides along the guide face (753, 756).

2. The machine tool (100) according to claim 1, wherein
the guide face (753) has:
a first concave section (751) into which the tip end portion (763) is inserted when the tool gripping section (79) moves close to the tool mounting section (34a), and
a second concave section (752) into which the tip end portion (763) is inserted when the tool gripping section (79) moves away from the tool mounting section (34a), the depth of which is smaller than that of the first concave section (751), and
the protruding section (765) has a biasing section (761) for biasing the tip end portion (763) toward the guide face (753).

3. The machine tool (100) according to claim 2, wherein the second concave section (752) is recessed stepwise.

4. The machine tool (100) according to claim 1, wherein
the guide face (756) has:
a concave section (754) into which the tip end portion (763) is inserted when the tool gripping section (79) moves close to the tool mounting section (34a), and
a non-concave contact section (755) with which the tip end portion (763) makes contact when the tool gripping section (79) moves away from the tool mounting section (34a),
and
the protruding section (765) has a biasing section (761) for biasing the tip end portion (763) toward the guide face (756).

5. The machine tool (100) according to claim 4, wherein the contact section (755) has a tapered face (755a) which is inclined so as to move close to the arm section (76) as moving away from the concave section (754).

6. The machine tool (100) according to any one of claims 2 to 5, wherein
the tip end portion is a spherical member (763),
the protruding section (765) has:
an accommodating concave section (760) recessed in a direction parallel with the axial direction,
a biasing spring (761) accommodated in the accommodating concave section (760) and serving as the biasing section, and
a spherical member holding cylinder (762, 766) engaging with the end section of the biasing spring (761) and having a closed cylinder section (762a, 766a) on the side of an opening of the accommodating concave section (760), and
the spherical member (763) is rotatably accommodated in the closed cylinder section (762a, 766a).

7. The machine tool (100) according to claim 6, wherein a guide cylinder (764) for allowing the smooth movement of the spherical member holding cylinder (762, 766) in a direction parallel with the axial direction is fitted in the inside of the opening portion of the accommodating concave section (760), and the spherical member holding cylinder (762, 766) is disposed in the inside of the guide cylinder (764).

8. The machine tool (100) according to any one of claims 1 to 7, wherein
the protruding sections (765), two in number, protrude in directions opposite to each other, and
the guide face (753, 756) is disposed so as to be opposed to the tip end portion (763) of each of the protruding sections (765).

## Patentansprüche

1. Maschinenwerkzeug (100) mit:
einem Greiferarm (70), der einen Armbereich (76), einen Stützbereich (75) zum schwenkbaren Stützen des Armbereiches (76) und einen Werkzeuggreifbereich (79) zum lösbaren Greifen eines Werkzeugs und einen Nockenmitnehmer (71, 72) hat,
einer Spindel (34), in der das durch den Greifarm (70) gegriffene Werkzeug in einem Werkzeuganbringungsbereich (34a) lösbar angebracht ist, um ein Werkstück zu bearbeiten,
einem Spindelkopf (32), der die Spindel (34) drehbar hält,
einem Nockenmechanismus (60), der an dem Spindelkopf (32) installiert ist und mit dem Nockenmitnehmer (71, 72) in Kontakt gelangt, und
einem Vorschubbereich (10) zum Vorschieben des Greifarms (70) zu einer Austauschposition, an der das in der Spindel (34) angebrachte Werkzeug ausgetauscht wird, wobei
die Spindel (34) zwischen einer Bearbeitungsposition, an der das Werkstück bearbeitet wird und der Austauschposition bewegbar ist,
wobei der Greifarm (70), der zu der Austauschposition vorgeschoben wird, durch einen Nockenbetrieb des Nockenmechanismus (60) und des Nockenmitnehmers (71, 72) schwenkbar ist, wenn die Spindel (34) bewegt wird, so dass der Werkzeuggreifbereich (79) in die Nähe zu dem Werkzeuganbringungsbereich (34a) und von diesem weg bewegbar ist,
wobei der Stützbereich (75) eine Führungsseite (753, 756) hat, die entlang der Schwenkrichtung des Armbereiches (76) ausgebildet ist, wobei die Führungsseite (753, 756) daran angepasst ist, das Schwenken des Greifarms (70) zu führen, und
zwischen einer Schwenkmittelwelle (77) des Armbereiches (76) und dem Werkzeuggreifbereich (79) hat der Armbereich (76) einen vorstehenden Bereich (765), der in einer Richtung entlang der axialen Richtung der Mittelwelle (77) vorsteht, und ein Spitzenendabschnitt (763) davon gleitet entlang der Führungsseite (753, 756).

2. Maschinenwerkzeug (100) gemäß Anspruch 1, wobei die Führungsseite (753) folgendes aufweist:
einen ersten konkaven Bereich (751), in den der Spitzenendabschnitt (763) eingefügt wird, wenn sich der Werkzeuggreifbereich (79) in die Nähe des Werkzeuganbringungsbereiches (34a) bewegt, und
einen zweiten konkaven Bereich (752), in den der Spitzenendabschnitt (763) eingefügt wird, wenn sich der Werkzeuggreifbereich (79) von dem Werkzeuganbringungsbereich (34a) weg bewegt, wobei seine Tiefe kleiner ist als jene des ersten konkaven Bereiches (751), und
wobei der vorstehende Bereich (765) einen Vorspannbereich (761) zum Vorspannen des Spitzenendabschnitts (763) zu der Führungsseite (753) aufweist.

3. Maschinenwerkzeug (100) gemäß Anspruch 2, wobei der zweite konkave Bereich (752) ein ausgesparter Absatz ist.

4. Maschinenwerkzeug (100) gemäß Anspruch 1, wobei die Führungsseite (756) folgendes aufweist:
einen konkaven Bereich (754), in den der Spitzenendabschnitt (763) eingefügt wird, wenn sich der Werkzeuggreifbereich (79) in die Nähe des Werkzeuganbringungsbereiches (34a) bewegt, und
einen nicht-konkaven Kontaktbereich (755), mit dem der Spitzenendabschnitt (763) in Kontakt gelangt, wenn sich der Werkzeuggreifbereich (79) von dem Werkzeuganbringungsbereich (34a) weg bewegt, und
wobei der vorstehende Bereich (765) einen Vorspannbereich (761) zum Vorspannen des Spitzenendabschnitts (763) zu der Führungsseite (756) aufweist.

5. Maschinenwerkzeug (100) gemäß Anspruch 4, wobei der Kontaktbereich (755) eine abgeschrägte Seite (755a) hat, die so geneigt ist, dass sie sich in die Nähe des Armbereiches (76) bewegt, wenn sie sich von dem konkaven Bereich (754) weg bewegt.

6. Maschinenwerkzeug (100) gemäß einem der Ansprüche 2 bis 5, wobei
der Spitzenendabschnitt ein sphärisches Element (763) ist,
wobei der vorstehende Bereich (765) folgendes aufweist:
einen konkaven Aufnahmebereich (760), der in einer Richtung ausgespart ist, die parallel zu der axialen Richtung ist,
eine Vorspannfeder (761), die in dem konkaven Aufnahmebereich (760) aufgenommen ist und als der Vorspannbereich dient, und
einen Haltezylinder (762, 766) eines sphärischen Elements, der mit dem Endbereich der Vorspannfeder (761) im Eingriff ist und einen geschlossenen Zylinderbereich (762a, 766a) an der Seite einer Öffnung des konkaven Aufnahmebereiches (760) hat, und
das sphärische Element (763) ist in dem geschlossenen Zylinderbereich (762a, 766a) drehbar aufgenommen.

7. Maschinenwerkzeug (100) gemäß Anspruch 6, wobei ein Führungszylinder (764) zum Ermöglichen einer behutsamen Bewegung des Haltezylinders (762, 766) eines sphärischen Elements in einer Richtung, die parallel zu der axialen Richtung ist, in dem Inneren des Öffnungsabschnitts des konkaven Aufnahmebereiches (760) angebracht ist, und der Haltezylinder (762, 766) eines sphärischen Elements ist im Inneren des Führungszylinders (764) angeordnet.

8. Maschinenwerkzeug (100) gemäß einem der Ansprüche 1 bis 7, wobei
die vorstehenden Bereiche (765) in einer Anzahl von zwei in Richtungen vorstehen, die einander entgegengesetzt sind,
und
die Führungsseite (753, 756) so angeordnet ist, dass sie dem Spitzenendabschnitt (763) des jeweiligen vorstehenden Bereiches (765) gegenüberliegt.

## Revendications

1. Machine-outil (100) comprenant:
un bras de saisie (70) comportant une section de bras (76), une section de support (75) afin de supporter avec possibilité de basculer la section de bras (76), une section de saisie d'outil (79) destinée à saisir de manière amovible un outil et un élément suiveur de came (71, 72),
une broche (34) dans laquelle l'outil saisi par le bras de saisie (70) est monté de manière amovible sur une section de montage d'outil (34a) afin d'assurer l'usinage,
une tête de broche (32) destinée à maintenir la broche (34) avec liberté de rotation,
un mécanisme à came (60) qui est installé sur la tête de broche (32) et entre en contact avec l'élément suiveur de came (71, 72), et
une section de transfert (10) destinée à transférer le bras de saisie (70) vers une position d'échange dans laquelle l'outil monté sur la broche (34) est échangé, dans laquelle
la broche (34) peut se déplacer entre une position d'usinage dans laquelle une pièce est usinée et la position d'échange,
le bras de saisie (70) transféré vers la position d'échange peut être basculé par un fonctionnement de came du mécanisme de came (60) et de l'élément suiveur de came (71, 72) lorsque la broche (34) est déplacée de telle sorte que la section de saisie d'outil (79) peut être déplacée vers la section de montage d'outil (34a) et à l'opposé de celle-ci,
la section de support (75) présente une face de guidage (753, 756) formée suivant la direction de basculement de la section de bras (76), la face de guidage (753, 756) est adaptée afin de guider le basculement du bras de saisie (70), et
entre un arbre central de basculement (77) de la section de bras (76) et la section de saisie d'outil (79), la section de bras (76) comporte une section en saillie (765) qui s'étend suivant une direction le long de la direction axiale de l'arbre central (77) et dont une partie d'extrémité de pointe (763) coulisse le long de la face de guidage (753, 756).

2. Machine-outil (100) selon la revendication 1, dans laquelle la face de guidage (753) comporte :
une première section concave (751) dans laquelle la partie d'extrémité de pointe (763) est insérée lorsque la section de saisie d'outil (79) se déplace à proximité de la section de montage d'outil (34a), et
une seconde section concave (752) dans laquelle la partie d'extrémité de pointe (763) est insérée lorsque la section de saisie d'outil (79) se déplace à l'opposé de la section de montage d'outil (34a), dont la profondeur est inférieure à celle de la première section concave (751), et
la section en saillie (765) présente une section préchargée (761) afin de précharger la partie d'extrémité de pointe (763) vers la face de guidage (753).

3. Machine-outil (100) selon la revendication 2, dans laquelle la seconde section concave (752) est creusée de manière étagée.

4. Machine-outil (100) selon la revendication 1, dans laquelle la face de guidage (756) comporte :
une section concave (754) dans laquelle la partie d'extrémité de pointe (763) est insérée lorsque la section de saisie d'outil (79) se déplace à proximité de la section de montage d'outil (34a), et
une section de contact non concave (755) avec laquelle la partie d'extrémité de pointe (763) entre en contact lorsque la section de saisie d'outil (79) se déplace à l'opposé de la section de montage d'outil (34a), et
la section en saillie (765) présente une section de préchargement (761) destinée à précharger la partie d'extrémité de pointe (763) vers la face de guidage (756).

5. Machine-outil (100) selon la revendication 4, dans laquelle la section de contact (755) comporte une face conique (755a) qui est inclinée afin de se rapprocher de la section de bras (76) en se déplaçant à l'opposé de la section concave (754).

6. Machine-outil (100) selon l'une quelconque des revendications 2 à 5, dans laquelle
la partie d'extrémité de pointe est un élément sphérique (763),
la section en saillie (765) comporte :
une section concave de réception (760) creusée suivant une direction parallèle à la direction axiale,
un ressort de précharge (761) reçu dans la section concave de réception (760) et servant de section de précharge, et
un cylindre de retenue d'élément sphérique (762, 766) couplé avec la section d'extrémité du ressort de précharge (761) et présentant une section cylindrique fermée (762a, 766a) sur le côté d'une ouverture de la section concave de réception (760), et
l'élément sphérique (763) est reçu de manière à pouvoir tourner dans la section cylindrique fermée (762a, 766a).

7. Machine-outil (100) selon la revendication 6, dans laquelle un cylindre de guidage (764) destiné à permettre le mouvement régulier du cylindre de retenue d'élément sphérique (762, 766) suivant une direction parallèle à la direction axiale est assemblé à l'intérieur de la partie d'ouverture de la section concave de réception (760), et le cylindre de retenue d'élément sphérique (762, 766) est disposé à l'intérieur du cylindre de guidage (764).

8. Machine-outil (100) selon l'une quelconque des revendications 1 à 7, dans laquelle
les sections en saillie (765), deux en nombre, s'étendent dans des directions opposées l'une à l'autre, et
la face de guidage (753, 756) est disposée de manière à être opposée à la partie d'extrémité de pointe (763) de chacune des sections en saillie (765).
